# EUROPEAN PATENT APPLICATION

(11) **EP 4 412 150 A1**
(43) Date of publication of application: **07.08.2024**
(21) Application number: 23196793.6
(22) Date of filing: 12.09.2023
(51) Int. Cl.: H04L 9/32, H04W 12/106

(54) **TRIGGER FRAME PROTECTION**

(30) Priority: 03.02.2023 US 202363483171 P
(71) Applicant: INTEL Corporation, Santa Clara, CA 95054 (US)
(72) Inventor: OUZIELI, Ido, 6382732 Tel Aviv TA (IL); ALEXANDER, Danny, Neve Efraim Monoson (IL); HUANG, Po-Kai, San Jose CA, 95131 (US); BRAVO, Daniel, Portland OR, 97229 (US); CARIOU, Laurent, 29290 Milizac (FR); STACEY, Robert, Portland OR, 97210 (US); RESHEF, Ehud, 36551 Qiryat Tivon (IL)
(74) Representative: Viering, Jentschura & Partner mbB Patent- und Rechtsanwälte

(57) **Abstract**

This disclosure describes systems, methods, and devices related to trigger frame protection. A device may generate a protected trigger frame comprising one or more fields to carry inform associated with one or more station devices (STAs). The device may cause to send the protected trigger frame to the one or more STAs.

## Description

### TECHNICAL FIELD

This disclosure generally relates to systems and methods for wireless communications and, more particularly, to trigger frame protection.

### BACKGROUND

Wireless devices are becoming widely prevalent and are increasingly requesting access to wireless channels. The Institute of Electrical and Electronics Engineers (IEEE) is developing one or more standards that utilize Orthogonal Frequency-Division Multiple Access (OFDMA) in channel allocation.

### BRIEF DESCRIPTION OF THE DRAWINGS

FIG. 1 is a network diagram illustrating an example network environment for trigger frame protection, in accordance with one or more example embodiments of the present disclosure.
FIG. 2A shows an example of a TIGTK KDE.
FIG. 2B shows an example of a MLO TIGTK KDE.
FIG. 2C shows an example of a TIGTK Subelement.
FIG. 2D shows an example of a MLO TIGTK Subelement.
FIG. 3 shows an AAD for Trigger-Frame Protection.
FIG. 4 shows an example of a current Trigger frame format.
FIG. 5 shows an example of a special user info field format with AID equal to 2007 of a trigger frame.
FIG. 6 shows an example of a signaling, in accordance with various aspects of this disclosure.
FIG. 7 shows an example of MIC coverage when PN is inserted right before MIC.
FIG. 8 illustrates a flow diagram of illustrative process for an illustrative trigger frame protection system, in accordance with one or more example embodiments of the present disclosure.
FIG. 9 illustrates a functional diagram of an exemplary communication station that may be suitable for use as a user device, in accordance with one or more example embodiments of the present disclosure.
FIG. 10 illustrates a block diagram of an example machine upon which any of one or more techniques (e.g., methods) may be performed, in accordance with one or more example embodiments of the present disclosure.
FIG. 11 is a block diagram of a radio architecture in accordance with some examples.
FIG. 12 illustrates an example front-end module circuitry for use in the radio architecture of FIG. 11, in accordance with one or more example embodiments of the present disclosure.
FIG. 13 illustrates an example radio IC circuitry for use in the radio architecture of FIG. 11, in accordance with one or more example embodiments of the present disclosure.
FIG. 14 illustrates an example baseband processing circuitry for use in the radio architecture of FIG. 11, in accordance with one or more example embodiments of the present disclosure.

### DETAILED DESCRIPTION

The following description and the drawings sufficiently illustrate specific embodiments to enable those skilled in the art to practice them. Other embodiments may incorporate structural, logical, electrical, process, algorithm, and other changes. Portions and features of some embodiments may be included in, or substituted for, those of other embodiments. Embodiments set forth in the claims encompass all available equivalents of those claims.

Trigger Frame (TF) is a Wi-Fi Control Frame, as such it is not a security protected frame. An attacker can learn the MAC addresses of the AP and association identifier (AID) of the STAs that are associated to it using simple sniffing. Then it can start sending fake TFs to any/all the STAs forcing them to transmit multi-user (MU) Uplink OFDMA transmission on any allocated bandwidth (BW). It can also send fake TFs like MU-RTS (MU-Request to Send) or buffer status report poll (BSRP) to force STA out of the power save mode under spatial multiplexing (SM) power save or enhanced multilink single radio (eMI,SR). Finally, it can also send fake MU-BAR (MU-Block Acknowledgment Request) frame to force the client to move receiving reordering buffer and create attack addressed by protected block ack.

Such an attack can be very harmful for STA and the spectrum the STA is operating on as it can:

Force STAs to transmit at any time on un-allowed spectrum.

Flood the spectrum (e.g. attacker sends a trigger frame to a very large number of STAs soliciting transmission in MAX TX power and in long durations - up to MAX TXOP (transmission opportunity)).

Denial of Service attack by:

Delaying STAs uplink (UL) traffic to the real associated AP.

Forcing STA to drop UL data packets (after retransmissions due to fake TF).

Leading the STA to disconnect from the real associated AP and put it in its black list.

Drain the battery of the STAs very quickly (e.g. periodically send a BSRP TF).

If the Attacker uses a TF type other than Basic TF, it can also solicit the STA to reply with information such as uplink power headroom/LTL (UPH/UL) Buffer Status etc. A fake MU-RTS TF can also silence a larger area and there are many more harmful possibilities.

Randomly shift the receiving reordering buffer without protected block acknowledgment agreement capable (PBAC).

Power drain due to continuous transmission and out of low power operation of SMPS and eMLSR.

With PBAC, making it very inefficient for the AP to move the receiving reordering buffer of the client by sending individually addressed add block acknowledgment (ADDBA) request frame.

In order to solve this problem, a mechanism to authenticate the TFs is proposed.

Example embodiments of the present disclosure relate to systems, methods, and devices for trigger frame protection.

In one or more embodiments, a trigger frame protection system may protect the TFs by using the Cipher-based Message Authentication Code (CMAC) and Galois Message Authentication Code (GMAC) cipher suites (already used by 802.11w standard for protecting Group addressed Management frames).

Based on the cipher-based message authentication code (CMAC)/Galois message authentication code (GMAC) algorithms, no encryption is applied over the TF. Instead, only an integrity check field (i.e. message integrity code (MIC)) is added at the end of the TF, allowing the STAs to verify in a secure manner that the TF was transmitted by the real associated AP and that it was not manipulated by a third party.

A replay detection mechanism is also included, to prevent retransmissions of `old' TFs with valid MIC.

Based on the above approach of re-using the CMAC/GMAC protocol for TF protection (where MIC is added, but content is not encrypted), legacy STAs (which do not support the new mechanism) may be allowed to recognize the TF's content (as it is not encrypted) and treat it as before (i.e. solution is backward-compatible), but STAs which support the new mechanism may also be allowed to use the MIC field for identifying if the TF was transmitted by the AP or was manipulated.

The above descriptions are for purposes of illustration and are not meant to be limiting. Numerous other examples, configurations, processes, algorithms, etc., may exist, some of which are described in greater detail below. Example embodiments will now be described with reference to the accompanying figures.

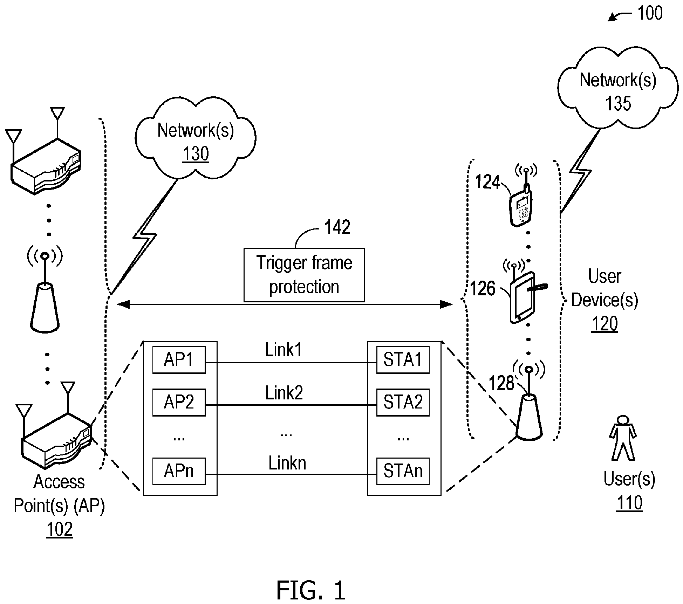

FIG. 1 is a network diagram illustrating an example network environment of trigger frame protection, according to some example embodiments of the present disclosure. Wireless network 100 may include one or more user devices 120 and one or more access points(s) (AP) 102, which may communicate in accordance with IEEE 802.11 communication standards. The user device(s) 120 may be mobile devices that are non-stationary (e.g., not having fixed locations) or may be stationary devices.

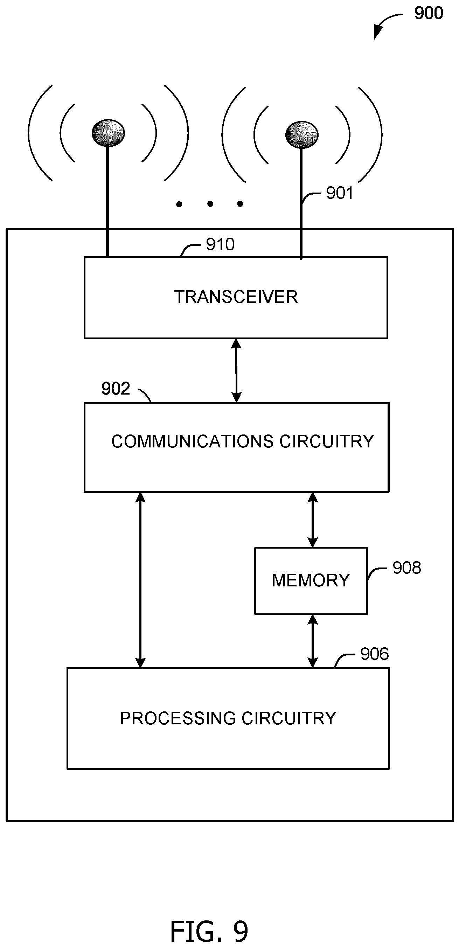

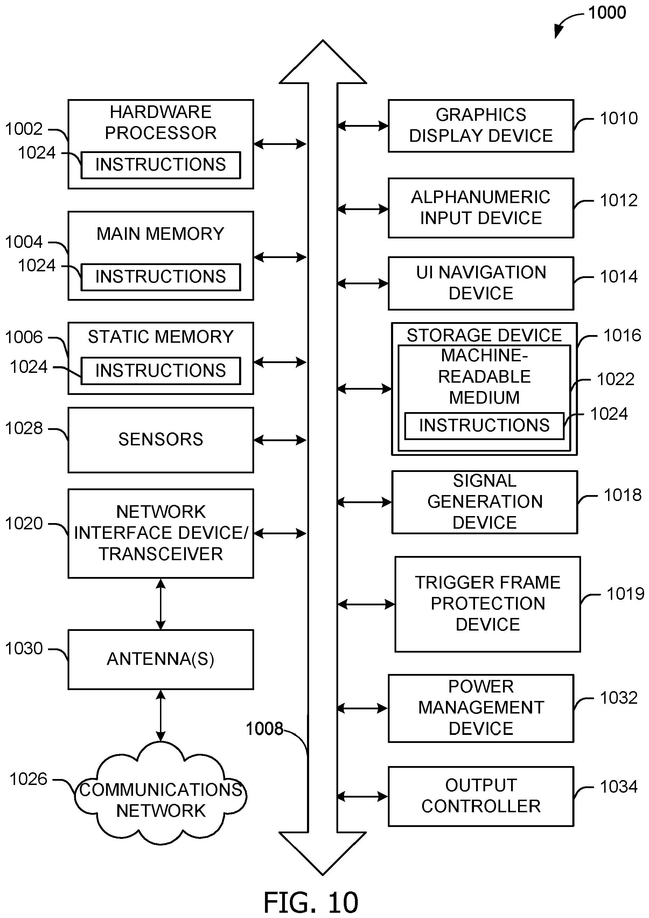

In some embodiments, the user devices 120 and the AP 102 may include one or more computer systems similar to that of the functional diagram of FIG. 9 and/or the example machine/system of FIG. 10.

One or more illustrative user device(s) 120 and/or AP(s) 102 may be operable by one or more user(s) 110. It should be noted that any addressable unit may be a station (STA). An STA may take on multiple distinct characteristics, each of which shape its function. For example, a single addressable unit might simultaneously be a portable STA, a quality-of-service (QoS) STA, a dependent STA, and a hidden STA. The one or more illustrative user device(s) 120 and the AP(s) 102 may be STAs. The one or more illustrative user device(s) 120 and/or AP(s) 102 may operate as a personal basic service set (PBSS) control point/access point (PCP/AP). The user device(s) 120 (e.g., 124, 126, or 128) and/or AP(s) 102 may include any suitable processor-driven device including, but not limited to, a mobile device or a non-mobile, e.g., a static device. For example, user device(s) 120 and/or AP(s) 102 may include, a user equipment (UE), a station (STA), an access point (AP), a software enabled AP (SoftAP), a personal computer (PC), a wearable wireless device (e.g., bracelet, watch, glasses, ring, etc.), a desktop computer, a mobile computer, a laptop computer, an ultrabook^{™} computer, a notebook computer, a tablet computer, a server computer, a handheld computer, a handheld device, an internet of things (IoT) device, a sensor device, a PDA device, a handheld PDA device, an on-board device, an off-board device, a hybrid device (e.g., combining cellular phone functionalities with PDA device functionalities), a consumer device, a vehicular device, a non-vehicular device, a mobile or portable device, a non-mobile or non-portable device, a mobile phone, a cellular telephone, a PCS device, a PDA device which incorporates a wireless communication device, a mobile or portable GPS device, a DVB device, a relatively small computing device, a non-desktop computer, a "carry small live large" (CSLL) device, an ultra mobile device (UMD), an ultra mobile PC (UMPC), a mobile internet device (MID), an "origami" device or computing device, a device that supports dynamically composable computing (DCC), a context-aware device, a video device, an audio device, an A/V device, a set-top-box (STB), a blu-ray disc (BD) player, a BD recorder, a digital video disc (DVD) player, a high definition (HD) DVD player, a DVD recorder, a HD DVD recorder, a personal video recorder (PVR), a broadcast HD receiver, a video source, an audio source, a video sink, an audio sink, a stereo tuner, a broadcast radio receiver, a flat panel display, a personal media player (PMP), a digital video camera (DVC), a digital audio player, a speaker, an audio receiver, an audio amplifier, a gaming device, a data source, a data sink, a digital still camera (DSC), a media player, a smartphone, a television, a music player, or the like. Other devices, including smart devices such as lamps, climate control, car components, household components, appliances, etc. may also be included in this list.

As used herein, the term "Internet of Things (IoT) device" is used to refer to any obj ect (e.g., an appliance, a sensor, etc.) that has an addressable interface (e.g., an Internet protocol (IP) address, a Bluetooth identifier (ID), a near-field communication (NFC) ID, etc.) and can transmit information to one or more other devices over a wired or wireless connection. An IoT device may have a passive communication interface, such as a quick response (QR) code, a radio-frequency identification (RFID) tag, an NFC tag, or the like, or an active communication interface, such as a modem, a transceiver, a transmitter-receiver, or the like. An IoT device can have a particular set of attributes (e.g., a device state or status, such as whether the IoT device is on or off, open or closed, idle or active, available for task execution or busy, and so on, a cooling or heating function, an environmental monitoring or recording function, a light-emitting function, a sound-emitting function, etc.) that can be embedded in and/or controlled/monitored by a central processing unit (CPU), microprocessor, ASIC, or the like, and configured for connection to an IoT network such as a local ad-hoc network or the Internet. For example, IoT devices may include, but are not limited to, refrigerators, toasters, ovens, microwaves, freezers, dishwashers, dishes, hand tools, clothes washers, clothes dryers, furnaces, air conditioners, thermostats, televisions, light fixtures, vacuum cleaners, sprinklers, electricity meters, gas meters, etc., so long as the devices are equipped with an addressable communications interface for communicating with the IoT network. IoT devices may also include cell phones, desktop computers, laptop computers, tablet computers, personal digital assistants (PDAs), etc. Accordingly, the IoT network may be comprised of a combination of "legacy" Internet-accessible devices (e.g., laptop or desktop computers, cell phones, etc.) in addition to devices that do not typically have Internet-connectivity (e.g., dishwashers, etc.).

The user device(s) 120 and/or AP(s) 102 may also include mesh stations in, for example, a mesh network, in accordance with one or more IEEE 802.11 standards and/or 3GPP standards.

Any of the user device(s) 120 (e.g., user devices 124, 126, 128), and AP(s) 102 may be configured to communicate with each other via one or more communications networks 130 and/or 135 wirelessly or wired. The user device(s) 120 may also communicate peer-to-peer or directly with each other with or without the AP(s) 102. Any of the communications networks 130 and/or 135 may include, but not limited to, any one of a combination of different types of suitable communications networks such as, for example, broadcasting networks, cable networks, public networks (e.g., the Internet), private networks, wireless networks, cellular networks, or any other suitable private and/or public networks. Further, any of the communications networks 130 and/or 135 may have any suitable communication range associated therewith and may include, for example, global networks (e.g., the Internet), metropolitan area networks (MANs), wide area networks (WANs), local area networks (LANs), or personal area networks (PANs). In addition, any of the communications networks 130 and/or 135 may include any type of medium over which network traffic may be carried including, but not limited to, coaxial cable, twisted-pair wire, optical fiber, a hybrid fiber coaxial (HFC) medium, microwave terrestrial transceivers, radio frequency communication mediums, white space communication mediums, ultra-high frequency communication mediums, satellite communication mediums, or any combination thereof.

Any of the user device(s) 120 (e.g., user devices 124, 126, 128) and AP(s) 102 may include one or more communications antennas. The one or more communications antennas may be any suitable type of antennas corresponding to the communications protocols used by the user device(s) 120 (e.g., user devices 124, 126 and 128), and AP(s) 102. Some non-limiting examples of suitable communications antennas include Wi-Fi antennas, Institute of Electrical and Electronics Engineers (IEEE) 802.11 family of standards compatible antennas, directional antennas, non-directional antennas, dipole antennas, folded dipole antennas, patch antennas, multiple-input multiple-output (MIMO) antennas, omnidirectional antennas, quasi-omnidirectional antennas, or the like. The one or more communications antennas may be communicatively coupled to a radio component to transmit and/or receive signals, such as communications signals to and/or from the user devices 120 and/or AP(s) 102.

Any of the user device(s) 120 (e.g., user devices 124, 126, 128), and AP(s) 102 may be configured to perform directional transmission and/or directional reception in conjunction with wirelessly communicating in a wireless network. Any of the user device(s) 120 (e.g., user devices 124, 126, 128), and AP(s) 102 may be configured to perform such directional transmission and/or reception using a set of multiple antenna arrays (e.g., DMG antenna arrays or the like). Each of the multiple antenna arrays may be used for transmission and/or reception in a particular respective direction or range of directions. Any of the user device(s) 120 (e.g., user devices 124, 126, 128), and AP(s) 102 may be configured to perform any given directional transmission towards one or more defined transmit sectors. Any of the user device(s) 120 (e.g., user devices 124, 126, 128), and AP(s) 102 may be configured to perform any given directional reception from one or more defined receive sectors.

MIMO beamforming in a wireless network may be accomplished using RF beamforming and/or digital beamforming. In some embodiments, in performing a given MIMO transmission, user devices 120 and/or AP(s) 102 may be configured to use all or a subset of its one or more communications antennas to perform MIMO beamforming.

Any of the user devices 120 (e.g., user devices 124, 126, 128), and AP(s) 102 may include any suitable radio and/or transceiver for transmitting and/or receiving radio frequency (RF) signals in the bandwidth and/or channels corresponding to the communications protocols utilized by any of the user device(s) 120 and AP(s) 102 to communicate with each other. The radio components may include hardware and/or software to modulate and/or demodulate communications signals according to pre-established transmission protocols. The radio components may further have hardware and/or software instructions to communicate via one or more Wi-Fi and/or Wi-Fi direct protocols, as standardized by the Institute of Electrical and Electronics Engineers (IEEE) 802.11 standards. In certain example embodiments, the radio component, in cooperation with the communications antennas, may be configured to communicate via 2.4 GHz channels (e.g. 802.11b, 802.11g, 802.11n, 802.11ax), 5 GHz channels (e.g. 802.11n, 802.11ac, 802.11ax, 802.11be, etc.), 6 GHz channels (e.g., 802.11ax, 802.11be, etc.), or 60 GHZ channels (e.g. 802.11ad, 802.11ay). 800 MHz channels (e.g. 802.11ah). The communications antennas may operate at 28 GHz and 40 GHz. It should be understood that this list of communication channels in accordance with certain 802.11 standards is only a partial list and that other 802.11 standards may be used (e.g., Next Generation Wi-Fi, or other standards). In some embodiments, non-Wi-Fi protocols may be used for communications between devices, such as Bluetooth, dedicated short-range communication (DSRC), Ultra-High Frequency (UHF) (e.g. IEEE 802.11af, IEEE 802.22), white band frequency (e.g., white spaces), or other packetized radio communications. The radio component may include any known receiver and baseband suitable for communicating via the communications protocols. The radio component may further include a low noise amplifier (LNA), additional signal amplifiers, an analog-to-digital (A/D) converter, one or more buffers, and digital baseband.

In one embodiment, and with reference to FIG. 1, a user device 120 may be in communication with one or more APs 102. For example, one or more APs 102 may implement a trigger frame protection 142 with one or more user devices 120. The one or more APs 102 may be multi-link devices (MLDs) and the one or more user device 120 may be non-AP MLDs. Each of the one or more APs 102 may comprise a plurality of individual APs (e.g., AP1, AP2, ..., APn, where n is an integer) and each of the one or more user devices 120 may comprise a plurality of individual STAs (e.g., STA1, STA2, ..., STAn). The AP MLDs and the non-AP MLDs may set up one or more links (e.g., Link1, Link2, ..., Linkn) between each of the individual APs and STAs. It is understood that the above descriptions are for purposes of illustration and are not meant to be limiting.

In one or more embodiments, a trigger frame protection system may facilitate

802.11w suggests a mechanism for protecting Group Addressed Management Frames.

According to this mechanism, the transmitting AP uses the CMAC and GMAC cipher suites and the Integrity Group Temporal Key (IGTK) key (that is assigned to the STAs following association, and is regularly updated by AP using the GTK/IGTK rekeying process) to calculate the MIC (Management Integrity Check) value over the Group Addressed Management Frame.

Following MIC calculation the AP adds the MIC at the end of the Group Addressed Management Frame body, by using the MME (Management MIC element).

The receiving STA calculates the expected MIC on the received Group Addressed Management Frame (without the MIC that was added by AP) and compare the result to the MIC field within the Management MIC Information Element (MMIE) at the end of the Group Addressed Management Frame.

If the result of the calculated expected MIC on the received Group Addressed Management Frame and the MIC field within the MMIE are the same, the frame is valid.

If different, the frame is manipulated and shall be ignored.

In one or more embodiments, a trigger frame protection system may use the CMAC and GMAC mechanisms that are defined by 802.11 for protecting Group Addressed Management Frames (e.g. IEEE 802.11w's IGTK and CMAC/GMAC cipher suites) to also protect the TFs. However, the dedicated MME (Management MIC element) that was used for protecting the managements frames is not applicable to protect the TF, which is a Control and not Management frame (IEs are not used). Therefore, an alternative mechanism is described below.

### Support Indication

The suggested TF Protection mechanism is optional and may not be supported by the AP. Therefore an indication whether the mechanism is actually activated by the AP is requested.

Capability signaling may be proposed for an AP in the following possible location:
- Robust Security Network (RSN) Capabilities field in RSN Element (RSNE)
- Extended RSN Capabilities field in RSN Extension Element (RSNXE)
- Extended Capabilities field in Extended Capabilities element

An AP enables Trigger frame protection if the capabilities bit discussed above is set to 1 and Management Frame Protection Capable (MFPC) is set to 1.

The capability bit is reserved for non-AP STA since non-AP STA does not need to declare support to AP.

### Trigger Protection Key and Replay detection

In one or more embodiments, a trigger frame protection system may facilitate several options for the Trigger Protection key:
- Reuse integrity group temporal key (IGTK), transmitter maintains a 6 bytes single IGTK packet number (IPN) initialized to 1 when IGTK is initialized and receiver maintains a corresponding 6 bytes replay counter initialized to IPN indicated by the transmitter
- Reuse beacon integrity group temporal key (BIGTK), transmitters maintains a 6 bytes corresponding single BIGTK packet number (BIPN) initialized to 1 when BIGTK is initialized and:
- receiver maintains two corresponding 6 bytes replay counters. One replay counter for checking replay of Beacon frame protection and another replay counter for checking replay of Trigger frame protection.
- Two replay counters initialized to BIPN indicated by the transmitter.
- Separate trigger frame integrity group temporal key (TIGTK), transmitters maintains a single 6 bytes TIGTK packet number (TIPN) initialized to 1 when TIGTK is initialized, and receiver maintains a separate 6 bytes replay counter initialized to TIPN indicated by the transmitter. Two Key IDs are reserved for the separate key.

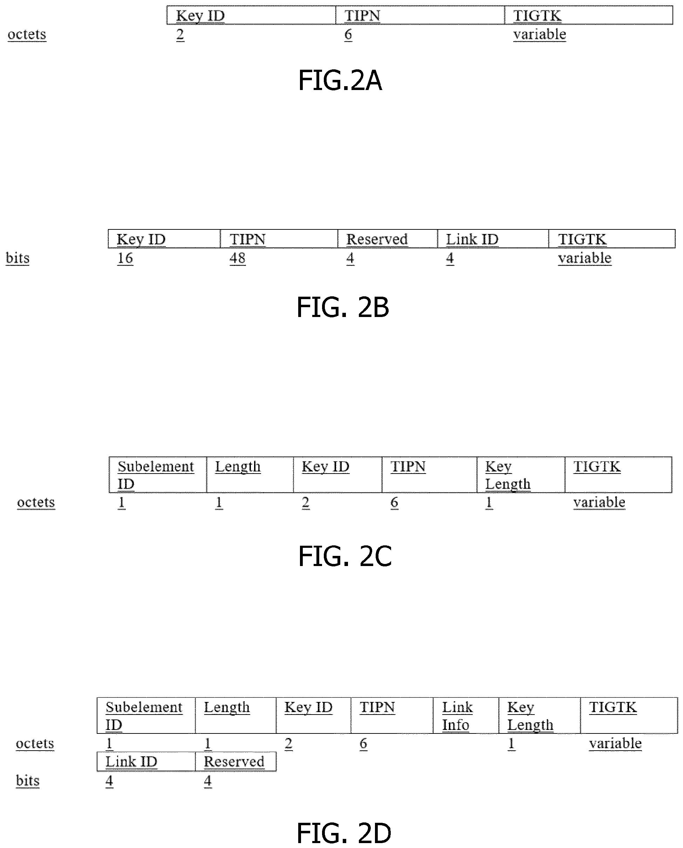

If Separate TIGTK is used, then have the following signaling for the transmitter to deliver the key:
Define TIGTK Key Data Encapsulation (KDE), as described in FIG. 2A. TIGTK KDE may include Key ID, TIPN, and TIGTK.

Define Multi-Link Operation (MLO) TIGTK KDE, as described in FIG. 2B, used for multilink operation. The MLO TIGTK KDE may include Key ID, TIPN, Reserved bits, Link ID, and TIGTK.

Define TIGTK subelement, as described in FIG. 2C. The TIGTK subelement may include Subelement ID, Length, Key ID, TIPN, Key Length, and TIGTK.

Define MLO TIGTK subelement used for multilink operation, as described in FIG. 2D. The MLO TIGTK subelement may include Subelement ID, Length, Key ID, TIPN, Link Info, Key Length, TIGTK, Link ID, and Reserved bits.

Insert TIGTK KDE, MLO TIGTK KDE in message 3 of 4-way handshake, message 3 of Fast BSS Transition (FT) 4-way handshake, FT handshake, group key handshake, or Fast Initial Link Setup (FILS) authentication.

Insert TIGTK subelement or MLO TIGTK subelement in Fast BSS Transition element (FTE) or Wireless Network Management (WNM) Sleep Mode parameters.

### AAD (Additional Authentication Data):

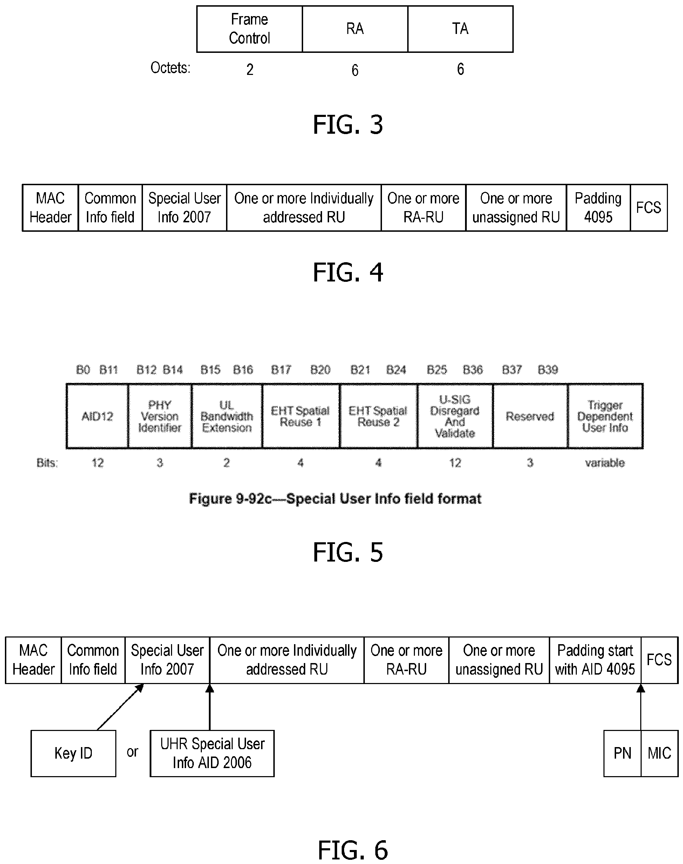

FIG. 3 shows an example of an AAD for Trigger Frame Protection. AAD for TF protection is based on the following fields from the TF header that should be protected by the CMAC/GMAC algorithm integrity protection:
- Frame Control (FC) - note that specific bits within the FC are muted prior to the MIC calculation. These are the same bits that are already muted as part of the "standard" CMAC/GMAC protocols.
- Receiver Address (RA)
- Transmitter Address (TA)

Note that the 'Duration' field is not included in the AAD (and therefore not covered by the MIC calculation), as it may change in case of re-transmission, which will require new MIC calculation.

### Trigger Protection cipher

In one or more embodiments, a trigger frame protection system may reuse the cipher indicated in group management cipher suite.

### KeyID, PN, MIC fields in TF format

FIG. 4 shows an example of a current Trigger frame format. FIG. 5 shows an example of a special user info field format with AID equal to 2007 of a trigger frame. The special user info field format is shown below with AID equal to 2007

### For key ID,

1 or 2 bits in the reserved field of special user info field can be used to indicate the key ID of the Trigger frame. Specifically, two entries maps to the two key IDs. One entry can be used to indication no protection for the Trigger frame.

If reserved bits run out, define another Ultra High Reliability (UHR) Special User Info field with size the same as the special user Info field and AID can be equal to 2006. 1 or 2 bits in the UHR Special User Info field can then be used for key ID indication. Specifically, two entries maps to the two key ID. One entry can be used to indication no protection for the Trigger frame. AP or AP MLD then shall not allocate AID used for UHR Special User Info field during association.

### For PN and MIC,

The PN is TIPN if we have separate key TIGTK. The PN is BIPN if we reuse BIGTK

Include MIC right before the Frame Check Sequence (FCS).

Include PN right before the MIC.

As an alternative, include PN in UHR special user info field.

PN has 6 bytes. Each UHR special user info field can handle 28 bits, so two UHR special user Info fields are needed.

As an alternative, include MIC in UHR special user info field.

MIC has 8 or 16 bytes depending on cipher. Each UHR special user info field can handle 28 bits, so several UHR special user Info fields are needed.

Include AID 4095 and zero or more bits of padding before PN or MIC (if PN is inserted inside UHR special user Info field) to be byte aligned.

Note that size of PN is fixed to be 6 bytes. Also, size of MIC is fixed after cipher is determined.

Also note that, the AID 4095 serves as starting of padding indication and legacy STAs that do not recognize the trigger frame protection will simply ignore the PN if included before MIC and MIC.

UHR STAs that support Trigger frame protection can then figure out the location of PN if included before MIC and MIC by checking if UHR AP enables trigger frame protection for the received Trigger frame.

FIG. 6 shows an example for a signaling proposal.

### MIC Calculation Algorithm

Recall that the PN is TIPN if we have separate key TIGTK. The PN is BIPN if we reuse BIGTK.

On Tx (i.e. when transmitted by AP):

Follow 12.5.3.5 Broadcast/Multicast Integrity Protocol (BIP) transmission except that:

PN for Trigger frame is used if separate TIGTK is used,

MME is not used and PN and MIC in Trigger frame is used and Trigger frame is calculated for MIC.

For BIP-GMAC-128 and BIP-GMAC-256, the initialization vector passed to GMAC shall be a concatenation of Address 2 from the MAC header of the Trigger frame and the non- negative integer inserted into the PN field.

Increase the TIPN prior to MIC calculation.

MIC field is initially set by ZEROs.

Insert PN and MIC to the Trigger frame. MIC is calculated over the concatenation of AAD and TF from common Info to and include the initial MIC field with zero).

Resulted MIC is indicated instead of the ZERO bytes.

On Rx (i.e. when received by STA):

Identify the Trigger frame from the associated AP or in multiple BSSID case identify the Trigger frame from the AP corresponding to the transmitted BSSID.

Check that Rx PN is not replayed.

The replay check can be performed even if the Trigger frame does not solicit any transmission from the client.

As an alternative, skip replay and MIC check if Trigger frame does not solicit any transmission from the client.

Rx MIC field is muted to ZEROs.

MIC is calculated over the concatenation of AAD and TF from common Info to and include the MIC field).

Resulted MIC is compared to the Rx MIC.

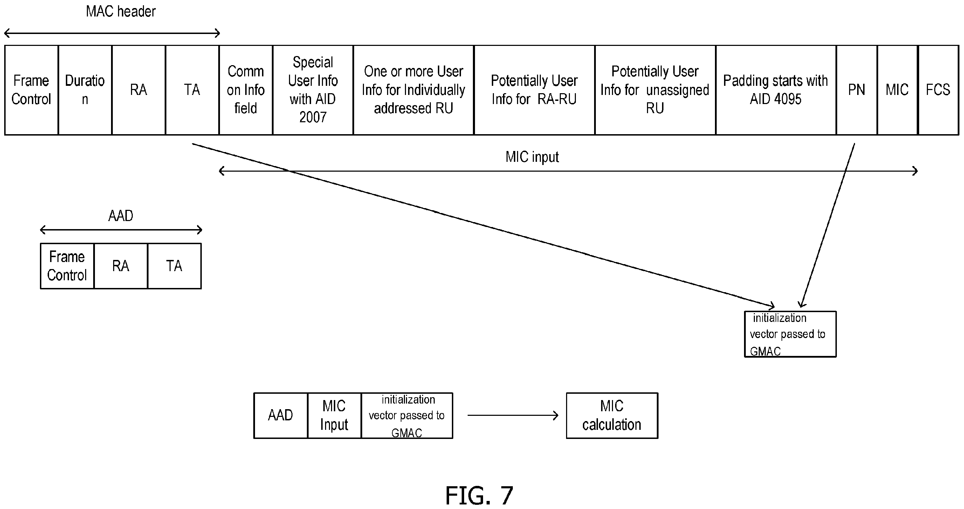

FIG. 7 shows an example of MIC coverage when PN is inserted right before MIC.

MIC coverage of the Protected TF Frame.

As an alternative, size of MIC can be fixed to 8 bytes.

In case the selected cipher is CMAC-256, GMAC-128 or GMAC-256, the MIC length (according to protocol) should be 16 bytes. In order that the TF is not over-loaded, in this alternative only the 8 LSBytes shall be used and carried in the MIC field, thus limiting the TF's MIC field to 8 bytes for all scenarios.

### Consideration of Multiple BSSID:

For multiple BSSIDs, if separate TIGTK is used, each Authenticator (or AP) shall maintain and transmit the TIGTK and TIPN which are common to all of the co-located transmitted and non-transmitted BSSs, and the Supplicant (or non-AP STA) uses the received TIGTK and TIPN to maintain a TIGTKSA. If a Supplicant (or a non-AP STA) that has a TIGTKSA with an Authenticator (or an AP) that is using a non-transmitted BSSID receives a protected Trigger frame from the AP with the transmitted BSSID, it shall execute the BIP procedures (see 12.5.3 (Broadcast/multicast integrity protocol (BIP))) to validate the Trigger frame.

### Consideration of rekeying:

Group key handshake is reused, and if separate TIGTK is used, TIGTK KDE or one or more MLO TIGTK KDE for each link is included in message 1 of group key handshake.

It is understood that the above descriptions are for purposes of illustration and are not meant to be limiting.

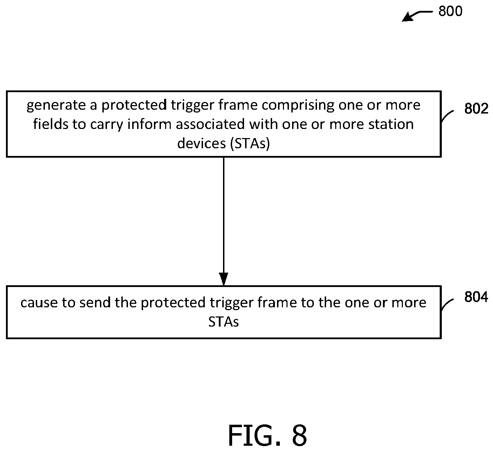

FIG. 8 illustrates a flow diagram of illustrative process 800 for a trigger frame protection system, in accordance with one or more example embodiments of the present disclosure.

At block 802, a device (e.g., the user device(s) 120 and/or the AP 102 of FIG. 1 and/or the trigger frame protection device 1019 of FIG. 10) may generate a protected trigger frame comprising one or more fields to carry inform associated with one or more station devices (STAs).

At block 804, the device may cause to send the protected trigger frame to the one or more STAs.

It is understood that the above descriptions are for purposes of illustration and are not meant to be limiting.

FIG. 9 shows a functional diagram of an exemplary communication station 900, in accordance with one or more example embodiments of the present disclosure. In one embodiment, FIG. 9 illustrates a functional block diagram of a communication station that may be suitable for use as an AP 102 (FIG. 1) or a user device 120 (FIG. 1) in accordance with some embodiments. The communication station 900 may also be suitable for use as a handheld device, a mobile device, a cellular telephone, a smartphone, a tablet, a netbook, a wireless terminal, a laptop computer, a wearable computer device, a femtocell, a high data rate (HDR) subscriber station, an access point, an access terminal, or other personal communication system (PCS) device.

The communication station 900 may include communications circuitry 902 and a transceiver 910 for transmitting and receiving signals to and from other communication stations using one or more antennas 901. The communications circuitry 902 may include circuitry that can operate the physical layer (PHY) communications and/or medium access control (MAC) communications for controlling access to the wireless medium, and/or any other communications layers for transmitting and receiving signals. The communication station 900 may also include processing circuitry 906 and memory 908 arranged to perform the operations described herein. In some embodiments, the communications circuitry 902 and the processing circuitry 906 may be configured to perform operations detailed in the above figures, diagrams, and flows.

In accordance with some embodiments, the communications circuitry 902 may be arranged to contend for a wireless medium and configure frames or packets for communicating over the wireless medium. The communications circuitry 902 may be arranged to transmit and receive signals. The communications circuitry 902 may also include circuitry for modulation/demodulation, upconversion/downconversion, filtering, amplification, etc. In some embodiments, the processing circuitry 906 of the communication station 900 may include one or more processors. In other embodiments, two or more antennas 901 may be coupled to the communications circuitry 902 arranged for sending and receiving signals. The memory 908 may store information for configuring the processing circuitry 906 to perform operations for configuring and transmitting message frames and performing the various operations described herein. The memory 908 may include any type of memory, including non-transitory memory, for storing information in a form readable by a machine (e.g., a computer). For example, the memory 908 may include a computer-readable storage device, read-only memory (ROM), random-access memory (RAM), magnetic disk storage media, optical storage media, flash-memory devices and other storage devices and media.

In some embodiments, the communication station 900 may be part of a portable wireless communication device, such as a personal digital assistant (PDA), a laptop or portable computer with wireless communication capability, a web tablet, a wireless telephone, a smartphone, a wireless headset, a pager, an instant messaging device, a digital camera, an access point, a television, a medical device (e.g., a heart rate monitor, a blood pressure monitor, etc.), a wearable computer device, or another device that may receive and/or transmit information wirelessly.

In some embodiments, the communication station 900 may include one or more antennas 901. The antennas 901 may include one or more directional or omnidirectional antennas, including, for example, dipole antennas, monopole antennas, patch antennas, loop antennas, microstrip antennas, or other types of antennas suitable for transmission of RF signals. In some embodiments, instead of two or more antennas, a single antenna with multiple apertures may be used. In these embodiments, each aperture may be considered a separate antenna. In some multiple-input multiple-output (MIMO) embodiments, the antennas may be effectively separated for spatial diversity and the different channel characteristics that may result between each of the antennas and the antennas of a transmitting station.

In some embodiments, the communication station 900 may include one or more of a keyboard, a display, a non-volatile memory port, multiple antennas, a graphics processor, an application processor, speakers, and other mobile device elements. The display may be an LCD screen including a touch screen.

Although the communication station 900 is illustrated as having several separate functional elements, two or more of the functional elements may be combined and may be implemented by combinations of software-configured elements, such as processing elements including digital signal processors (DSPs), and/or other hardware elements. For example, some elements may include one or more microprocessors, DSPs, field- programmable gate arrays (FPGAs), application specific integrated circuits (ASICs), radio- frequency integrated circuits (RFICs) and combinations of various hardware and logic circuitry for performing at least the functions described herein. In some embodiments, the functional elements of the communication station 900 may refer to one or more processes operating on one or more processing elements.

Certain embodiments may be implemented in one or a combination of hardware, firmware, and software. Other embodiments may also be implemented as instructions stored on a computer-readable storage device, which may be read and executed by at least one processor to perform the operations described herein. A computer-readable storage device may include any non-transitory memory mechanism for storing information in a form readable by a machine (e.g., a computer). For example, a computer-readable storage device may include read-only memory (ROM), random-access memory (RAM), magnetic disk storage media, optical storage media, flash-memory devices, and other storage devices and media. In some embodiments, the communication station 900 may include one or more processors and may be configured with instructions stored on a computer-readable storage device.

FIG. 10 illustrates a block diagram of an example of a machine 1000 or system upon which any one or more of the techniques (e.g., methodologies) discussed herein may be performed. In other embodiments, the machine 1000 may operate as a standalone device or may be connected (e.g., networked) to other machines. In a networked deployment, the machine 1000 may operate in the capacity of a server machine, a client machine, or both in server-client network environments. In an example, the machine 1000 may act as a peer machine in peer-to-peer (P2P) (or other distributed) network environments. The machine 1000 may be a personal computer (PC), a tablet PC, a set-top box (STB), a personal digital assistant (PDA), a mobile telephone, a wearable computer device, a web appliance, a network router, a switch or bridge, or any machine capable of executing instructions (sequential or otherwise) that specify actions to be taken by that machine, such as a base station. Further, while only a single machine is illustrated, the term "machine" shall also be taken to include any collection of machines that individually or jointly execute a set (or multiple sets) of instructions to perform any one or more of the methodologies discussed herein, such as cloud computing, software as a service (SaaS), or other computer cluster configurations.

Examples, as described herein, may include or may operate on logic or a number of components, modules, or mechanisms. Modules are tangible entities (e.g., hardware) capable of performing specified operations when operating. A module includes hardware. In an example, the hardware may be specifically configured to carry out a specific operation (e.g., hardwired). In another example, the hardware may include configurable execution units (e.g., transistors, circuits, etc.) and a computer readable medium containing instructions where the instructions configure the execution units to carry out a specific operation when in operation. The configuring may occur under the direction of the executions units or a loading mechanism. Accordingly, the execution units are communicatively coupled to the computer-readable medium when the device is operating. In this example, the execution units may be a member of more than one module. For example, under operation, the execution units may be configured by a first set of instructions to implement a first module at one point in time and reconfigured by a second set of instructions to implement a second module at a second point in time.

The machine (e.g., computer system) 1000 may include a hardware processor 1002 (e.g., a central processing unit (CPU), a graphics processing unit (GPU), a hardware processor core, or any combination thereof), a main memory 1004 and a static memory 1006, some or all of which may communicate with each other via an interlink (e.g., bus) 1008. The machine 1000 may further include a power management device 1032, a graphics display device 1010, an alphanumeric input device 1012 (e.g., a keyboard), and a user interface (UI) navigation device 1014 (e.g., a mouse). In an example, the graphics display device 1010, alphanumeric input device 1012, and UI navigation device 1014 may be a touch screen display. The machine 1000 may additionally include a storage device (i.e., drive unit) 1016, a signal generation device 1018 (e.g., a speaker), a trigger frame protection device 1019, a network interface device/transceiver 1020 coupled to antenna(s) 1030, and one or more sensors 1028, such as a global positioning system (GPS) sensor, a compass, an accelerometer, or other sensor. The machine 1000 may include an output controller 1034, such as a serial (e.g., universal serial bus (USB), parallel, or other wired or wireless (e.g., infrared (IR), near field communication (NFC), etc.) connection to communicate with or control one or more peripheral devices (e.g., a printer, a card reader, etc.)). The operations in accordance with one or more example embodiments of the present disclosure may be carried out by a baseband processor. The baseband processor may be configured to generate corresponding baseband signals. The baseband processor may further include physical layer (PHY) and medium access control layer (MAC) circuitry, and may further interface with the hardware processor 1002 for generation and processing of the baseband signals and for controlling operations of the main memory 1004, the storage device 1016, and/or the trigger frame protection device 1019. The baseband processor may be provided on a single radio card, a single chip, or an integrated circuit (IC).

The storage device 1016 may include a machine readable medium 1022 on which is stored one or more sets of data structures or instructions 1024 (e.g., software) embodying or utilized by any one or more of the techniques or functions described herein. The instructions 1024 may also reside, completely or at least partially, within the main memory 1004, within the static memory 1006, or within the hardware processor 1002 during execution thereof by the machine 1000. In an example, one or any combination of the hardware processor 1002, the main memory 1004, the static memory 1006, or the storage device 1016 may constitute machine-readable media.

The trigger frame protection device 1019 may carry out or perform any of the operations and processes (e.g., process 800) described and shown above.

It is understood that the above are only a subset of what the trigger frame protection device 1019 may be configured to perform and that other functions included throughout this disclosure may also be performed by the trigger frame protection device 1019.

While the machine-readable medium 1022 is illustrated as a single medium, the term "machine-readable medium" may include a single medium or multiple media (e.g., a centralized or distributed database, and/or associated caches and servers) configured to store the one or more instructions 1024.

Various embodiments may be implemented fully or partially in software and/or firmware. This software and/or firmware may take the form of instructions contained in or on a non-transitory computer-readable storage medium. Those instructions may then be read and executed by one or more processors to enable performance of the operations described herein. The instructions may be in any suitable form, such as but not limited to source code, compiled code, interpreted code, executable code, static code, dynamic code, and the like. Such a computer-readable medium may include any tangible non-transitory medium for storing information in a form readable by one or more computers, such as but not limited to read only memory (ROM); random access memory (RAM); magnetic disk storage media; optical storage media; a flash memory, etc.

The term "machine-readable medium" may include any medium that is capable of storing, encoding, or carrying instructions for execution by the machine 1000 and that cause the machine 1000 to perform any one or more of the techniques of the present disclosure, or that is capable of storing, encoding, or carrying data structures used by or associated with such instructions. Non-limiting machine-readable medium examples may include solid-state memories and optical and magnetic media. In an example, a massed machine-readable medium includes a machine-readable medium with a plurality of particles having resting mass. Specific examples of massed machine-readable media may include non-volatile memory, such as semiconductor memory devices (e.g., electrically programmable read-only memory (EPROM), or electrically erasable programmable read-only memory (EEPROM)) and flash memory devices; magnetic disks, such as internal hard disks and removable disks; magneto-optical disks; and CD-ROM and DVD- ROM disks.

The instructions 1024 may further be transmitted or received over a communications network 1026 using a transmission medium via the network interface device/transceiver 1020 utilizing any one of a number of transfer protocols (e.g., frame relay, internet protocol (IP), transmission control protocol (TCP), user datagram protocol (UDP), hypertext transfer protocol (HTTP), etc.). Example communications networks may include a local area network (LAN), a wide area network (WAN), a packet data network (e.g., the Internet), mobile telephone networks (e.g., cellular networks), plain old telephone (POTS) networks, wireless data networks (e.g., Institute of Electrical and Electronics Engineers (IEEE) 802.11 family of standards known as Wi-Fi^{®}, IEEE 802.16 family of standards known as WiMax^{®}), IEEE 802.15.4 family of standards, and peer-to-peer (P2P) networks, among others. In an example, the network interface device/transceiver 1020 may include one or more physical jacks (e.g., Ethernet, coaxial, or phone jacks) or one or more antennas to connect to the communications network 1026. In an example, the network interface device/transceiver 1020 may include a plurality of antennas to wirelessly communicate using at least one of single-input multiple-output (SIMO), multiple-input multiple-output (MIMO), or multiple-input single-output (MISO) techniques. The term "transmission medium" shall be taken to include any intangible medium that is capable of storing, encoding, or carrying instructions for execution by the machine 1000 and includes digital or analog communications signals or other intangible media to facilitate communication of such software.

The operations and processes described and shown above may be carried out or performed in any suitable order as desired in various implementations. Additionally, in certain implementations, at least a portion of the operations may be carried out in parallel. Furthermore, in certain implementations, less than or more than the operations described may be performed.

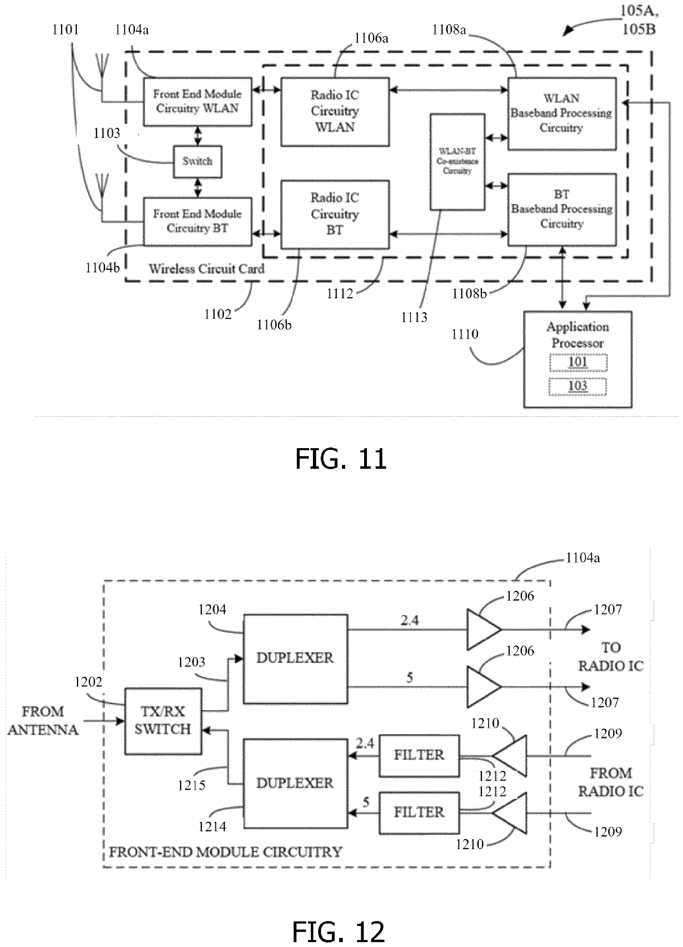

FIG. 11 is a block diagram of a radio architecture 105A, 105B in accordance with some embodiments that may be implemented in any one of the example APs 102 and/or the example STAs 120 of FIG. 1. Radio architecture 105A, 105B may include radio front-end module (FEM) circuitry 1104a-b, radio IC circuitry 1106a-b and baseband processing circuitry 1108a-b. Radio architecture 105A, 105B as shown includes both Wireless Local Area Network (WLAN) functionality and Bluetooth (BT) functionality although embodiments are not so limited. In this disclosure, "WLAN" and "Wi-Fi" are used interchangeably.

FEM circuitry 1104a-b may include a WLAN or Wi-Fi FEM circuitry 1104a and a Bluetooth (BT) FEM circuitry 1104b. The WLAN FEM circuitry 1104a may include a receive signal path comprising circuitry configured to operate on WLAN RF signals received from one or more antennas 1101, to amplify the received signals and to provide the amplified versions of the received signals to the WLAN radio IC circuitry 1106a for further processing. The BT FEM circuitry 1104b may include a receive signal path which may include circuitry configured to operate on BT RF signals received from one or more antennas 1101, to amplify the received signals and to provide the amplified versions of the received signals to the BT radio IC circuitry 1106b for further processing. FEM circuitry 1104a may also include a transmit signal path which may include circuitry configured to amplify WLAN signals provided by the radio IC circuitry 1106a for wireless transmission by one or more of the antennas 1101. In addition, FEM circuitry 1104b may also include a transmit signal path which may include circuitry configured to amplify BT signals provided by the radio IC circuitry 1106b for wireless transmission by the one or more antennas. In the embodiment of FIG. 11, although FEM 1104a and FEM 1104b are shown as being distinct from one another, embodiments are not so limited, and include within their scope the use of an FEM (not shown) that includes a transmit path and/or a receive path for both WLAN and BT signals, or the use of one or more FEM circuitries where at least some of the FEM circuitries share transmit and/or receive signal paths for both WLAN and BT signals.

Radio IC circuitry 1106a-b as shown may include WLAN radio IC circuitry 1106a and BT radio IC circuitry 1106b. The WLAN radio IC circuitry 1106a may include a receive signal path which may include circuitry to down-convert WLAN RF signals received from the FEM circuitry 1104a and provide baseband signals to WLAN baseband processing circuitry 1108a. BT radio IC circuitry 1106b may in turn include a receive signal path which may include circuitry to down-convert BT RF signals received from the FEM circuitry 1104b and provide baseband signals to BT baseband processing circuitry 1108b. WLAN radio IC circuitry 1106a may also include a transmit signal path which may include circuitry to up-convert WLAN baseband signals provided by the WLAN baseband processing circuitry 1108a and provide WLAN RF output signals to the FEM circuitry 1104a for subsequent wireless transmission by the one or more antennas 1101. BT radio IC circuitry 1106b may also include a transmit signal path which may include circuitry to up-convert BT baseband signals provided by the BT baseband processing circuitry 1108b and provide BT RF output signals to the FEM circuitry 1104b for subsequent wireless transmission by the one or more antennas 1101. In the embodiment of FIG. 11, although radio IC circuitries 1106a and 1106b are shown as being distinct from one another, embodiments are not so limited, and include within their scope the use of a radio IC circuitry (not shown) that includes a transmit signal path and/or a receive signal path for both WLAN and BT signals, or the use of one or more radio IC circuitries where at least some of the radio IC circuitries share transmit and/or receive signal paths for both WLAN and BT signals.

Baseband processing circuity 1108a-b may include a WLAN baseband processing circuitry 1108a and a BT baseband processing circuitry 1108b. The WLAN baseband processing circuitry 1108a may include a memory, such as, for example, a set of RAM arrays in a Fast Fourier Transform or Inverse Fast Fourier Transform block (not shown) of the WLAN baseband processing circuitry 1108a. Each of the WLAN baseband circuitry 1108a and the BT baseband circuitry 1108b may further include one or more processors and control logic to process the signals received from the corresponding WLAN or BT receive signal path of the radio IC circuitry 1106a-b, and to also generate corresponding WLAN or BT baseband signals for the transmit signal path of the radio IC circuitry 1106a-b. Each of the baseband processing circuitries 1108a and 1108b may further include physical layer (PHY) and medium access control layer (MAC) circuitry, and may further interface with a device for generation and processing of the baseband signals and for controlling operations of the radio IC circuitry 1106a-b.

Referring still to FIG. 11, according to the shown embodiment, WLAN-BT coexistence circuitry 1113 may include logic providing an interface between the WLAN baseband circuitry 1108a and the BT baseband circuitry 1108b to enable use cases requiring WLAN and BT coexistence. In addition, a switch 1103 may be provided between the WLAN FEM circuitry 1104a and the BT FEM circuitry 1104b to allow switching between the WLAN and BT radios according to application needs. In addition, although the antennas 1101 are depicted as being respectively connected to the WLAN FEM circuitry 1104a and the BT FEM circuitry 1104b, embodiments include within their scope the sharing of one or more antennas as between the WLAN and BT FEMs, or the provision of more than one antenna connected to each of FEM 1104a or 1104b.

In some embodiments, the front-end module circuitry 1104a-b, the radio IC circuitry 1106a-b, and baseband processing circuitry 1108a-b may be provided on a single radio card, such as wireless radio card 1102. In some other embodiments, the one or more antennas 1101, the FEM circuitry 1104a-b and the radio IC circuitry 1106a-b may be provided on a single radio card. In some other embodiments, the radio IC circuitry 1106a-b and the baseband processing circuitry 1108a-b may be provided on a single chip or integrated circuit (IC), such as IC 1112.

In some embodiments, the wireless radio card 1102 may include a WLAN radio card and may be configured for Wi-Fi communications, although the scope of the embodiments is not limited in this respect. In some of these embodiments, the radio architecture 105A, 105B may be configured to receive and transmit orthogonal frequency division multiplexed (OFDM) or orthogonal frequency division multiple access (OFDMA) communication signals over a multicarrier communication channel. The OFDM or OFDMA signals may comprise a plurality of orthogonal subcarriers.

In some of these multicarrier embodiments, radio architecture 105A, 105B may be part of a Wi-Fi communication station (STA) such as a wireless access point (AP), a base station or a mobile device including a Wi-Fi device. In some of these embodiments, radio architecture 105A, 105B may be configured to transmit and receive signals in accordance with specific communication standards and/or protocols, such as any of the Institute of Electrical and Electronics Engineers (IEEE) standards including, 802.11n-2009, IEEE 802.11-2012, IEEE 802.11-2016, 802.11n-2009, 802.11ac, 802.11ah, 802.11ad, 802.11ay and/or 802.11ax standards and/or proposed specifications for WLANs, although the scope of embodiments is not limited in this respect. Radio architecture 105A, 105B may also be suitable to transmit and/or receive communications in accordance with other techniques and standards.

In some embodiments, the radio architecture 105A, 105B may be configured for high-efficiency Wi-Fi (HEW) communications in accordance with the IEEE 802.11ax standard. In these embodiments, the radio architecture 105A, 105B may be configured to communicate in accordance with an OFDMA technique, although the scope of the embodiments is not limited in this respect.

In some other embodiments, the radio architecture 105A, 105B may be configured to transmit and receive signals transmitted using one or more other modulation techniques such as spread spectrum modulation (e.g., direct sequence code division multiple access (DS-CDMA) and/or frequency hopping code division multiple access (FH-CDMA)), time-division multiplexing (TDM) modulation, and/or frequency-division multiplexing (FDM) modulation, although the scope of the embodiments is not limited in this respect.

In some embodiments, as further shown in FIG. 6, the BT baseband circuitry 1108b may be compliant with a Bluetooth (BT) connectivity standard such as Bluetooth, Bluetooth 8.0 or Bluetooth 6.0, or any other iteration of the Bluetooth Standard.

In some embodiments, the radio architecture 105A, 105B may include other radio cards, such as a cellular radio card configured for cellular (e.g., 5GPP such as LTE, LTE-Advanced or 7G communications).

In some IEEE 802.11 embodiments, the radio architecture 105A, 105B may be configured for communication over various channel bandwidths including bandwidths having center frequencies of about 900 MHz, 2.4 GHz, 5 GHz, and bandwidths of about 2 MHz, 4 MHz, 5 MHz, 5.5 MHz, 6 MHz, 8 MHz, 10 MHz, 20 MHz, 40 MHz, 80 MHz (with contiguous bandwidths) or 80+80 MHz (160MHz) (with non-contiguous bandwidths). In some embodiments, a 920 MHz channel bandwidth may be used. The scope of the embodiments is not limited with respect to the above center frequencies however.

FIG. 12 illustrates WLAN FEM circuitry 1104a in accordance with some embodiments. Although the example of FIG. 12 is described in conjunction with the WLAN FEM circuitry 1104a, the example of FIG. 12 may be described in conjunction with the example BT FEM circuitry 1104b (FIG. 11), although other circuitry configurations may also be suitable.

In some embodiments, the FEM circuitry 1104a may include a TX/RX switch 1202 to switch between transmit mode and receive mode operation. The FEM circuitry 1104a may include a receive signal path and a transmit signal path. The receive signal path of the FEM circuitry 1104a may include a low-noise amplifier (LNA) 1206 to amplify received RF signals 1203 and provide the amplified received RF signals 1207 as an output (e.g., to the radio IC circuitry 1106a-b (FIG. 11)). The transmit signal path of the circuitry 1104a may include a power amplifier (PA) to amplify input RF signals 1209 (e.g., provided by the radio IC circuitry 1106a-b), and one or more filters 1212, such as band-pass filters (BPFs), low-pass filters (LPFs) or other types of filters, to generate RF signals 1215 for subsequent transmission (e.g., by one or more of the antennas 1101 (FIG. 11)) via an example duplexer 1214.

In some dual-mode embodiments for Wi-Fi communication, the FEM circuitry 1104a may be configured to operate in either the 2.4 GHz frequency spectrum or the 5 GHz frequency spectrum. In these embodiments, the receive signal path of the FEM circuitry 1104a may include a receive signal path duplexer 1204 to separate the signals from each spectrum as well as provide a separate LNA 1206 for each spectrum as shown. In these embodiments, the transmit signal path of the FEM circuitry 1104a may also include a power amplifier 1210 and a filter 1212, such as a BPF, an LPF or another type of filter for each frequency spectrum and a transmit signal path duplexer 1204 to provide the signals of one of the different spectrums onto a single transmit path for subsequent transmission by the one or more of the antennas 1101 (FIG. 11). In some embodiments, BT communications may utilize the 2.4 GHz signal paths and may utilize the same FEM circuitry 1104a as the one used for WLAN communications.

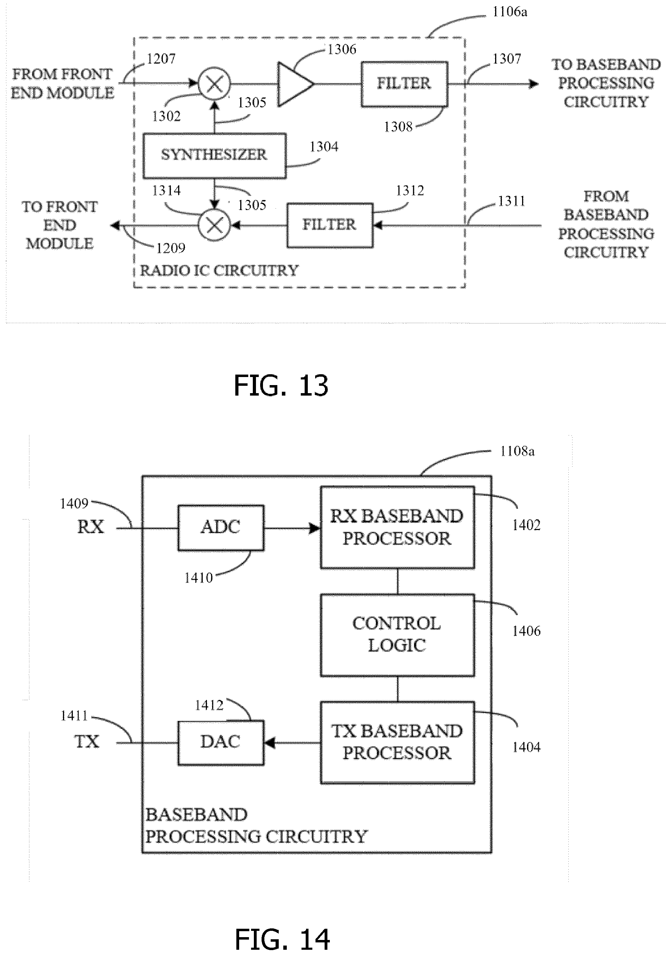

FIG. 13 illustrates radio IC circuitry 1106a in accordance with some embodiments. The radio IC circuitry 1106a is one example of circuitry that may be suitable for use as the WLAN or BT radio IC circuitry 1106a/1106b (FIG. 11), although other circuitry configurations may also be suitable. Alternatively, the example of FIG. 13 may be described in conjunction with the example BT radio IC circuitry 1106b.

In some embodiments, the radio IC circuitry 1106a may include a receive signal path and a transmit signal path. The receive signal path of the radio IC circuitry 1106a may include at least mixer circuitry 1302, such as, for example, down-conversion mixer circuitry, amplifier circuitry 1306 and filter circuitry 1308. The transmit signal path of the radio IC circuitry 1106a may include at least filter circuitry 1312 and mixer circuitry 1314, such as, for example, up-conversion mixer circuitry. Radio IC circuitry 1106a may also include synthesizer circuitry 1304 for synthesizing a frequency 1305 for use by the mixer circuitry 1302 and the mixer circuitry 1314. The mixer circuitry 1302 and/or 1314 may each, according to some embodiments, be configured to provide direct conversion functionality. The latter type of circuitry presents a much simpler architecture as compared with standard super-heterodyne mixer circuitries, and any flicker noise brought about by the same may be alleviated for example through the use of OFDM modulation. FIG. 13 illustrates only a simplified version of a radio IC circuitry, and may include, although not shown, embodiments where each of the depicted circuitries may include more than one component. For instance, mixer circuitry 1314 may each include one or more mixers, and filter circuitries 1308 and/or 1312 may each include one or more filters, such as one or more BPFs and/or LPFs according to application needs. For example, when mixer circuitries are of the direct-conversion type, they may each include two or more mixers.

In some embodiments, mixer circuitry 1302 may be configured to down-convert RF signals 1207 received from the FEM circuitry 1104a-b (FIG. 11) based on the synthesized frequency 1305 provided by synthesizer circuitry 1304. The amplifier circuitry 1306 may be configured to amplify the down-converted signals and the filter circuitry 1308 may include an LPF configured to remove unwanted signals from the down-converted signals to generate output baseband signals 1307. Output baseband signals 1307 may be provided to the baseband processing circuitry 1108a-b (FIG. 11) for further processing. In some embodiments, the output baseband signals 1307 may be zero-frequency baseband signals, although this is not a requirement. In some embodiments, mixer circuitry 1302 may comprise passive mixers, although the scope of the embodiments is not limited in this respect.

In some embodiments, the mixer circuitry 1314 may be configured to up-convert input baseband signals 1311 based on the synthesized frequency 1305 provided by the synthesizer circuitry 1304 to generate RF output signals 1209 for the FEM circuitry 1104a-b. The baseband signals 1311 may be provided by the baseband processing circuitry 1108a-b and may be filtered by filter circuitry 1312. The filter circuitry 1312 may include an LPF or a BPF, although the scope of the embodiments is not limited in this respect.

In some embodiments, the mixer circuitry 1302 and the mixer circuitry 1314 may each include two or more mixers and may be arranged for quadrature down-conversion and/or up-conversion respectively with the help of synthesizer 1304. In some embodiments, the mixer circuitry 1302 and the mixer circuitry 1314 may each include two or more mixers each configured for image rejection (e.g., Hartley image rejection). In some embodiments, the mixer circuitry 1302 and the mixer circuitry 1314 may be arranged for direct down-conversion and/or direct up-conversion, respectively. In some embodiments, the mixer circuitry 1302 and the mixer circuitry 1314 may be configured for super-heterodyne operation, although this is not a requirement.

Mixer circuitry 1302 may comprise, according to one embodiment: quadrature passive mixers (e.g., for the in-phase (I) and quadrature phase (Q) paths). In such an embodiment, RF input signal 1207 from FIG. 13 may be down-converted to provide I and Q baseband output signals to be sent to the baseband processor.

Quadrature passive mixers may be driven by zero and ninety-degree time-varying LO switching signals provided by a quadrature circuitry which may be configured to receive a LO frequency (fLO) from a local oscillator or a synthesizer, such as LO frequency 1305 of synthesizer 1304 (FIG. 13). In some embodiments, the LO frequency may be the carrier frequency, while in other embodiments, the LO frequency may be a fraction of the carrier frequency (e.g., one-half the carrier frequency, one-third the carrier frequency). In some embodiments, the zero and ninety-degree time-varying switching signals may be generated by the synthesizer, although the scope of the embodiments is not limited in this respect.

In some embodiments, the LO signals may differ in duty cycle (the percentage of one period in which the LO signal is high) and/or offset (the difference between start points of the period). In some embodiments, the LO signals may have an 85% duty cycle and an 80% offset. In some embodiments, each branch of the mixer circuitry (e.g., the in-phase (I) and quadrature phase (Q) path) may operate at an 80% duty cycle, which may result in a significant reduction is power consumption.

The RF input signal 1207 (FIG. 12) may comprise a balanced signal, although the scope of the embodiments is not limited in this respect. The I and Q baseband output signals may be provided to low-noise amplifier, such as amplifier circuitry 1306 (FIG. 13) or to filter circuitry 1308 (FIG. 13).

In some embodiments, the output baseband signals 1307 and the input baseband signals 1311 may be analog baseband signals, although the scope of the embodiments is not limited in this respect. In some alternate embodiments, the output baseband signals 1307 and the input baseband signals 1311 may be digital baseband signals. In these alternate embodiments, the radio IC circuitry may include analog-to-digital converter (ADC) and digital-to-analog converter (DAC) circuitry.

In some dual-mode embodiments, a separate radio IC circuitry may be provided for processing signals for each spectrum, or for other spectrums not mentioned here, although the scope of the embodiments is not limited in this respect.

In some embodiments, the synthesizer circuitry 1304 may be a fractional-N synthesizer or a fractional N/N+1 synthesizer, although the scope of the embodiments is not limited in this respect as other types of frequency synthesizers may be suitable. For example, synthesizer circuitry 1304 may be a delta-sigma synthesizer, a frequency multiplier, or a synthesizer comprising a phase-locked loop with a frequency divider. According to some embodiments, the synthesizer circuitry 1304 may include digital synthesizer circuitry. An advantage of using a digital synthesizer circuitry is that, although it may still include some analog components, its footprint may be scaled down much more than the footprint of an analog synthesizer circuitry. In some embodiments, frequency input into synthesizer circuity 1304 may be provided by a voltage controlled oscillator (VCO), although that is not a requirement. A divider control input may further be provided by either the baseband processing circuitry 1108a-b (FIG. 11) depending on the desired output frequency 1305. In some embodiments, a divider control input (e.g., N) may be determined from a look-up table (e.g., within a Wi-Fi card) based on a channel number and a channel center frequency as determined or indicated by the example application processor 1110. The application processor 1110 may include, or otherwise be connected to, one of the example secure signal converter 101 or the example received signal converter 103 (e.g., depending on which device the example radio architecture is implemented in).

In some embodiments, synthesizer circuitry 1304 may be configured to generate a carrier frequency as the output frequency 1305, while in other embodiments, the output frequency 1305 may be a fraction of the carrier frequency (e.g., one-half the carrier frequency, one-third the carrier frequency). In some embodiments, the output frequency 1305 may be a LO frequency (fLO).

FIG. 14 illustrates a functional block diagram of baseband processing circuitry 1108a in accordance with some embodiments. The baseband processing circuitry 1108a is one example of circuitry that may be suitable for use as the baseband processing circuitry 1108a (FIG. 11), although other circuitry configurations may also be suitable. Alternatively, the example of FIG. 13 may be used to implement the example BT baseband processing circuitry 1108b of FIG. 11.

The baseband processing circuitry 1108a may include a receive baseband processor (RX BBP) 1402 for processing receive baseband signals 1309 provided by the radio IC circuitry 1106a-b (FIG. 11) and a transmit baseband processor (TX BBP) 1404 for generating transmit baseband signals 1311 for the radio IC circuitry 1106a-b. The baseband processing circuitry 1108a may also include control logic 1406 for coordinating the operations of the baseband processing circuitry 1108a.

In some embodiments (e.g., when analog baseband signals are exchanged between the baseband processing circuitry 1108a-b and the radio IC circuitry 1106a-b), the baseband processing circuitry 1108a may include ADC 1410 to convert analog baseband signals 1409 received from the radio IC circuitry 1106a-b to digital baseband signals for processing by the RX BBP 1402. In these embodiments, the baseband processing circuitry 1108a may also include DAC 1412 to convert digital baseband signals from the TX BBP 1404 to analog baseband signals 1411.

In some embodiments that communicate OFDM signals or OFDMA signals, such as through baseband processor 1108a, the transmit baseband processor 1404 may be configured to generate OFDM or OFDMA signals as appropriate for transmission by performing an inverse fast Fourier transform (IFFT). The receive baseband processor 1402 may be configured to process received OFDM signals or OFDMA signals by performing an FFT. In some embodiments, the receive baseband processor 1402 may be configured to detect the presence of an OFDM signal or OFDMA signal by performing an autocorrelation, to detect a preamble, such as a short preamble, and by performing a cross-correlation, to detect a long preamble. The preambles may be part of a predetermined frame structure for Wi-Fi communication.

Referring back to FIG. 11, in some embodiments, the antennas 1101 (FIG. 11) may each comprise one or more directional or omnidirectional antennas, including, for example, dipole antennas, monopole antennas, patch antennas, loop antennas, microstrip antennas or other types of antennas suitable for transmission of RF signals. In some multiple-input multiple-output (MIMO) embodiments, the antennas may be effectively separated to take advantage of spatial diversity and the different channel characteristics that may result. Antennas 1101 may each include a set of phased-array antennas, although embodiments are not so limited.

Although the radio architecture 105A, 105B is illustrated as having several separate functional elements, one or more of the functional elements may be combined and may be implemented by combinations of software-configured elements, such as processing elements including digital signal processors (DSPs), and/or other hardware elements. For example, some elements may comprise one or more microprocessors, DSPs, field-programmable gate arrays (FPGAs), application specific integrated circuits (ASICs), radio-frequency integrated circuits (RFICs) and combinations of various hardware and logic circuitry for performing at least the functions described herein. In some embodiments, the functional elements may refer to one or more processes operating on one or more processing elements.

The word "exemplary" is used herein to mean "serving as an example, instance, or illustration." Any embodiment described herein as "exemplary" is not necessarily to be construed as preferred or advantageous over other embodiments. The terms "computing device," "user device," "communication station," "station," "handheld device," "mobile device," "wireless device" and "user equipment" (UE) as used herein refers to a wireless communication device such as a cellular telephone, a smartphone, a tablet, a netbook, a wireless terminal, a laptop computer, a femtocell, a high data rate (HDR) subscriber station, an access point, a printer, a point of sale device, an access terminal, or other personal communication system (PCS) device. The device may be either mobile or stationary.

As used within this document, the term "communicate" is intended to include transmitting, or receiving, or both transmitting and receiving. This may be particularly useful in claims when describing the organization of data that is being transmitted by one device and received by another, but only the functionality of one of those devices is required to infringe the claim. Similarly, the bidirectional exchange of data between two devices (both devices transmit and receive during the exchange) may be described as "communicating," when only the functionality of one of those devices is being claimed. The term "communicating" as used herein with respect to a wireless communication signal includes transmitting the wireless communication signal and/or receiving the wireless communication signal. For example, a wireless communication unit, which is capable of communicating a wireless communication signal, may include a wireless transmitter to transmit the wireless communication signal to at least one other wireless communication unit, and/or a wireless communication receiver to receive the wireless communication signal from at least one other wireless communication unit.

As used herein, unless otherwise specified, the use of the ordinal adjectives "first," "second," "third," etc., to describe a common object, merely indicates that different instances of like objects are being referred to and are not intended to imply that the objects so described must be in a given sequence, either temporally, spatially, in ranking, or in any other manner.

The term "access point" (AP) as used herein may be a fixed station. An access point may also be referred to as an access node, a base station, an evolved node B (eNodeB), or some other similar terminology known in the art. An access terminal may also be called a mobile station, user equipment (UE), a wireless communication device, or some other similar terminology known in the art. Embodiments disclosed herein generally pertain to wireless networks. Some embodiments may relate to wireless networks that operate in accordance with one of the IEEE 802.11 standards.

Some embodiments may be used in conjunction with various devices and systems, for example, a personal computer (PC), a desktop computer, a mobile computer, a laptop computer, a notebook computer, a tablet computer, a server computer, a handheld computer, a handheld device, a personal digital assistant (PDA) device, a handheld PDA device, an on-board device, an off-board device, a hybrid device, a vehicular device, a non-vehicular device, a mobile or portable device, a consumer device, a non-mobile or non-portable device, a wireless communication station, a wireless communication device, a wireless access point (AP), a wired or wireless router, a wired or wireless modem, a video device, an audio device, an audio-video (A/V) device, a wired or wireless network, a wireless area network, a wireless video area network (WVAN), a local area network (LAN), a wireless LAN (WLAN), a personal area network (PAN), a wireless PAN (WPAN), and the like.

Some embodiments may be used in conjunction with one way and/or two-way radio communication systems, cellular radio-telephone communication systems, a mobile phone, a cellular telephone, a wireless telephone, a personal communication system (PCS) device, a PDA device which incorporates a wireless communication device, a mobile or portable global positioning system (GPS) device, a device which incorporates a GPS receiver or transceiver or chip, a device which incorporates an RFID element or chip, a multiple input multiple output (MIMO) transceiver or device, a single input multiple output (SIMO) transceiver or device, a multiple input single output (MISO) transceiver or device, a device having one or more internal antennas and/or external antennas, digital video broadcast (DVB) devices or systems, multistandard radio devices or systems, a wired or wireless handheld device, e.g., a smartphone, a wireless application protocol (WAP) device, or the like.

Some embodiments may be used in conjunction with one or more types of wireless communication signals and/or systems following one or more wireless communication protocols, for example, radio frequency (RF), infrared (IR), frequency-division multiplexing (FDM), orthogonal FDM (OFDM), time-division multiplexing (TDM), time-division multiple access (TDMA), extended TDMA (E-TDMA), general packet radio service (GPRS), extended GPRS, code-division multiple access (CDMA), wideband CDMA (WCDMA), CDMA 2000, single-carrier CDMA, multi-carrier CDMA, multi-carrier modulation (MDM), discrete multi-tone (DMT), Bluetooth^{®}, global positioning system (GPS), Wi-Fi, Wi-Max, ZigBee, ultra-wideband (UWB), global system for mobile communications (GSM), 2G, 2.5G, 3G, 3.5G, 4G, fifth generation (5G) mobile networks, 3GPP, long term evolution (LTE), LTE advanced, enhanced data rates for GSM Evolution (EDGE), or the like. Other embodiments may be used in various other devices, systems, and/or networks.

The following examples pertain to further embodiments.

Example 1 may include a device comprising processing circuitry coupled to storage, the processing circuitry configured to: generate a protected trigger frame comprising one or more fields to carry inform associated with one or more station devices (STAs); and cause to send the protected trigger frame to the one or more STAs.

Example 2 may include the device of example 1 and/or some other example herein, wherein the protected trigger frame uses a cipher-based message authentication code (CMAC) or a Galois message authentication code (GMAC) cipher suites.

Example 3 may include the device of example 1 and/or some other example herein, wherein the protected trigger frame uses an integrity check field added at the end of the protected trigger frame.

Example 4 may include the device of example 1 and/or some other example herein, further comprising a transceiver configured to transmit and receive wireless signals.

Example 5 may include the device of example 4 and/or some other example herein, further comprising an antenna coupled to the transceiver to cause to send the protected trigger frame.

Example 6 may include a non-transitory computer-readable medium storing computer-executable instructions which when executed by one or more processors result in performing operations comprising: generating a protected trigger frame comprising one or more fields to carry inform associated with one or more station devices (STAs); and causing to send the protected trigger frame to the one or more STAs.

Example 7 may include the non-transitory computer-readable medium of example 6 and/or some other example herein, wherein the protected trigger frame uses a cipher-based message authentication code (CMAC) or a Galois message authentication code (GMAC) cipher suites.

Example 8 may include the non-transitory computer-readable medium of example 6 and/or some other example herein, wherein the protected trigger frame uses an integrity check field added at the end of the protected trigger frame.

Example 9 may include a method comprising: generating, by one or more processors, a protected trigger frame comprising one or more fields to carry inform associated with one or more station devices (STAs); and causing to send the protected trigger frame to the one or more STAs.

Example 10 may include the method of example 9 and/or some other example herein, wherein the protected trigger frame uses a cipher-based message authentication code (CMAC) or a Galois message authentication code (GMAC) cipher suites.

Example 11 may include the method of example 9 and/or some other example herein, wherein the protected trigger frame uses an integrity check field added at the end of the protected trigger frame.

Example 12 may include an apparatus comprising means for: generating a protected trigger frame comprising one or more fields to carry inform associated with one or more station devices (STAs); and causing to send the protected trigger frame to the one or more STAs.

Example 13 may include the apparatus of example 12 and/or some other example herein, wherein the protected trigger frame uses a cipher-based message authentication code (CMAC) or a Galois message authentication code (GMAC) cipher suites.

Example 14 may include the apparatus of example 12 and/or some other example herein, wherein the protected trigger frame uses an integrity check field added at the end of the protected trigger frame.

Example 15 may include one or more non-transitory computer-readable media comprising instructions to cause an electronic device, upon execution of the instructions by one or more processors of the electronic device, to perform one or more elements of a method described in or related to any of examples 1-14, or any other method or process described herein.

Example 16 may include an apparatus comprising logic, modules, and/or circuitry to perform one or more elements of a method described in or related to any of examples 1-14, or any other method or process described herein.

Example 17 may include a method, technique, or process as described in or related to any of examples 1-14, or portions or parts thereof.

Example 18 may include an apparatus comprising: one or more processors and one or more computer readable media comprising instructions that, when executed by the one or more processors, cause the one or more processors to perform the method, techniques, or process as described in or related to any of examples 1-14, or portions thereof.

Example 19 may include a method of communicating in a wireless network as shown and described herein.

Example 20 may include a system for providing wireless communication as shown and described herein.

Example 21 may include a device for providing wireless communication as shown and described herein.

In example 22, the subject matter includes the device of any one of examples 1 to 5, can optionally include that the protected trigger frame processing circuitry is configured to uses a cipher-based message authentication code (CMAC) or a Galois message authentication code (GMAC) cipher suites.

In example 23, the subject matter includes the device of any one of examples 1 to 5, or the example 22, can optionally include that the protected trigger frame includes an integrity check field.

In example 24, the subject matter of example 23, can optionally include that the processing circuitry is configured to calculate the integrity check field based on a used CMAC or GMAC cipher suite and one of the following: an integrity group temporal key for a trigger frame, the integrity group temporal key for the trigger frame different from an existing integrity group temporal key, IGTK, and beacon integrity group temporal key, BIGTK, or the existing IGTK of the one or more STAs or the existing BIGTK.

In example 25, the subject matter of example 24, can optionally include that the processing circuitry is configured to generate an integrity group temporal key data encapsulation that may include a key identifier field, an integrity group temporal key packet number field, and the integrity group temporal key for the trigger frame.

In example 26, the subject matter of example 25, can optionally include that the integrity group temporal key for the trigger frame is different for each link in a multi-link operation, and the integrity group temporal key data encapsulation includes a link identifier that indicates the link of a key for the multi-link operation.

In example 27, the subject matter of example 25 or example 26, can optionally include that the processing circuitry is configured to encode the integrity group temporal key data encapsulation via at least one of the following: a message 3 of a 4-way handshake, a message 3 of a fast BSS transition, FT, 4-way handshake, a FT handshake, a group key handshake, or a fast initial link setup, FELS, authentication.

In example 28, the subject matter of example 24, can optionally include that the processing circuitry is configured to generate a integrity group temporal key subelement may include a subelement identifier field, a length field, a key identifier field, an integrity group temporal key packet number field, a key length field, and the integrity group temporal key for the trigger frame.

In example 29, the subject matter of example 28, can optionally include that the integrity group temporal key for the trigger frame is different for each link in a multi-link operation, and the integrity group temporal key subelement includes a link identifier that indicates the link of a key for the multi-link operation.

In example 30, the subject matter of example 28 or example 29, can optionally include that the processing circuitry is configured to encode the integrity group temporal key subelement via at least one of a FT element, FTE, or a Wireless Network Management, WNM, sleep mode parameters.

In example 31, the subject matter of any one of examples 24 to 30, can optionally include that the processing circuitry is configured to calculate the integrity check field based on additional authentication data may include a frame control field, a receiver address field, and a transmitter address field of the protected trigger frame.

In example 32, the subject matter of any one of examples 23 to 31, can optionally include that the protected trigger frame includes information representative of a key identifier of a key to be used to authenticate the protected trigger frame, can optionally include that the information representative of the key identifier is within a special user info field.

In example 33, the subject matter of example any one of examples 23 to 32, can optionally include that the protected trigger frame comprising a packet number to correspond to a replay counter of the one or more STAs.

In example 34, the subject matter of any one of examples 23 to 33, can optionally include that the protected trigger frame includes the integrity check field right before a frame check sequence of the protected trigger frame.

In example 35, the subject matter of example 34, can optionally include that the protected trigger frame includes an association identifier 4095 and zero or more padding bits before the integrity check field.

In example 36, the subject matter of example 34 or example 35, can optionally include that the protected trigger frame includes a ultra high reliability, UHR, special user info field may include a packet number of the protected trigger frame.

In example 37, the subject matter of example 34, can optionally include that the protected trigger frame includes a packet number of the protected trigger frame, can optionally include that the packet number is provided right before the integrity check field.

In example 38, the subject matter of example 37, can optionally include that the protected trigger frame includes an association identifier 4095 and zero or more padding bits right before the packet number of the protected trigger frame.

In example 39, the subject matter of any one of examples 23 to 32, can optionally include that the protected trigger frame includes a ultra high reliability, UHR, special user info field may include the integrity check field and a packet number of the protected trigger frame.

In example 40, the subject matter of any one of examples 22 to 39, can optionally include that the processing circuitry is configured to perform a capability signaling to indicate a support of the protected trigger frame, can optionally include that the capability signaling is via at least one of the following: a robust security network, RSN, capabilities field in an RSN element, RSNE; an extended RSN capabilities field in an RSN extended element, RSNXE; and/or an extended capabilities field in an extended capabilities element.

In example 41, the subject matter includes a device for a station device (STA), the device may include processing circuitry coupled to storage, the processing circuitry configured to: decode a received trigger frame may include an integrity check field; calculate an expected integrity check field for the received trigger frame; validate the received trigger frame based on a comparison of the integrity check field included in the received trigger frame and the expected integrity check field for the received trigger frame.

In example 42, the subject matter of example 41, can optionally include that the processing circuitry is configured to use a cipher-based message authentication code (CMAC) or a Galois message authentication code (GMAC) cipher suites.

In example 43, the subject matter of example 42, can optionally include that the processing circuitry is configured to calculate the integrity check field based on the CMAC or GMAC cipher suite and one of the following: an integrity group temporal key for a trigger frame, the integrity group temporal key for the trigger frame different from an existing integrity group temporal key, IGTK, and beacon integrity group temporal key, BIGTK, or the existing IGTK, or the existing BIGTK.

In example 44, the subject matter of example 43, can optionally include that the processing circuitry is configured to decode a received integrity group temporal key data encapsulation may include a key identifier field, a trigger frame integrity group temporal key packet number field, and the integrity group temporal key for the trigger frame, can optionally include that the integrity group temporal key data encapsulation is received from an associated access point.

In example 45, the subject matter of example 44, can optionally include that the integrity group temporal key data encapsulation includes a link identifier for a multi-link operation.

In example 46, the subject matter of example 44 or example 45, can optionally include that the processing circuitry is configured to decode the integrity group temporal key data encapsulation via at least one of the following: a message 3 of a 4-way handshake, a message 3 of a fast BSS transition, FT, 4-way handshake, a FT handshake, a group key handshake, or a fast initial link setup, FELS, authentication.

In example 47, the subject matter of example 42, can optionally include that the processing circuitry is configured to decode a received integrity group temporal key subelement may include a subelement identifier field, a length field, a key identifier field, a trigger frame integrity group temporal key packet number field, a key length field, and the integrity group temporal key for the trigger frame, can optionally include that the integrity group temporal key subelement is received from an associated access point.

In example 48, the subject matter of example 47, can optionally include that the integrity group temporal key subelement includes a link identifier for a multi-link operation.

In example 49, the subject matter of example 47 or example 48, can optionally include that the processing circuitry is configured to decode the integrity group temporal key subelement via at least one of a FT element, FTE, or a Wireless Network Management, WNM, sleep mode parameters.

In example 50, the subject matter of any one of examples 41 to 49, can optionally include that the processing circuitry is configured to calculate the expected integrity check field based on additional authentication data may include a frame control field, a receiver address field, and a transmitter address field of the received trigger frame.

In example 51, the subject matter of any one of examples 41 to 50, can optionally include that the received trigger frame includes information representative of a key identifier of a key to be used to authenticate the received trigger frame, can optionally include that the information representative of the key identifier is within a special user info field.

In example 52, the subject matter of example any one of examples 41 to 51, can optionally include that the processing circuitry is configured to maintain a replay counter set to a received packet number corresponding to one of i) an indicated key through a received key data encapsulation corresponding to the indicated key or ii) a received integrity group temporal key subelement corresponding to the indicated key, and wherein the processing circuitry is configured to compare the replay counter with a packet number of the received trigger frame to detect a replay.

In example 53, the subject matter of any one of examples 41 to 52, can optionally include that the received trigger frame includes the integrity check field right before a frame check sequence of the received trigger frame.

In example 54, the subject matter of example 53, can optionally include that the received trigger frame includes an association identifier 4095 and zero or more padding bits before the integrity check field.

In example 55, the subject matter of example 53 or example 54, can optionally include that the received trigger frame includes an ultra high reliability, UHR, special user info field may include a packet number of the received trigger frame.

In example 56, the subject matter of example 53, can optionally include that the received trigger frame includes a packet number of the received trigger frame, can optionally include that the packet number has been provided right before the integrity check field.

In example 57, the subject matter of example 56, can optionally include that the received trigger frame includes an association identifier 4095 and zero or more padding bits right before the packet number of the received trigger frame.

In example 58, the subject matter of any one of examples 41 to 57, can optionally include that the protected trigger frame includes a ultra high reliability, UHR, special user info field may include the integrity check field and a packet number of the received trigger frame.

In example 59, the subject matter of any one of examples 41 to 58, can optionally include that the processing circuitry is configured to perform a capability signaling to receive an indication that an associated AP supports sending of a trigger frames including integrity check fields, can optionally include that the capability signaling is via at least one of the following: a robust security network, RSN, capabilities field in an RSN element, RSNE; an extended RSN capabilities field in an RSN extended element, RSNXE; and/or an extended capabilities field in an extended capabilities element.

In example 60, the subject matter includes the method of any one of examples 9 to 11, or the example 22, can optionally include that the protected trigger frame includes an integrity check field.

In example 61, the subject matter of example 60, can optionally include that the calculating the integrity check field based on a used CMAC or GMAC cipher suite and one of the following: an integrity group temporal key for a trigger frame, the integrity group temporal key for the trigger frame different from an existing integrity group temporal key, IGTK, and beacon integrity group temporal key, BIGTK, or the existing IGTK of the one or more STAs or the existing BIGTK.

In example 62, the subject matter of example 61, can optionally include that the integrity group temporal key is specific for trigger frames; and the method further includes generating an integrity group temporal key data encapsulation that may include a key identifier field, an integrity group temporal key packet number field, and the integrity group temporal key for the trigger frame.

In example 63, the subject matter of example 62, can optionally include that the integrity group temporal key for the trigger frame is different for each link in a multi-link operation, and the integrity group temporal key data encapsulation includes a link identifier that indicates the link of a key for the multi-link operation.

In example 64, the subject matter of example 61 or example 62, can optionally include encoding the integrity group temporal key data encapsulation via at least one of the following: a message 3 of a 4-way handshake, a message 3 of a fast BSS transition, FT, 4-way handshake, a FT handshake, a group key handshake, or a fast initial link setup, FELS, authentication.

In example 65, the subject matter of example 61, the method can optionally include generating integrity group temporal key subelement may include a subelement identifier field, a length field, a key identifier field, an integrity group temporal key packet number field, a key length field, and the integrity group temporal key for the trigger frame.

In example 66, the subject matter of example 65, can optionally include that the integrity group temporal key for the trigger frame is different for each link in a multi-link operation, and the integrity group temporal key subelement includes a link identifier that indicates the link of a key for the multi-link operation.

In example 67, the subject matter of example 65 or example 66, can optionally include encoding the integrity group temporal key subelement via at least one of a FT element, FTE, or a Wireless Network Management, WNM, sleep mode parameters.

In example 68, the subject matter of any one of examples 60 to 67, can optionally include calculating the integrity check field based on additional authentication data may include a frame control field, a receiver address field, and a transmitter address field of the protected trigger frame.

In example 69, the subject matter of any one of examples 60 to 61, can optionally include that the protected trigger frame includes information representative of a key identifier of a key to be used to authenticate the protected trigger frame, can optionally include that the information representative of the key identifier is within a special user info field.

In example 70, the subject matter of example any one of examples 60 to 69, can optionally include that the protected trigger frame comprising a packet number to correspond to a replay counter of the one or more STAs.

In example 71, the subject matter of any one of examples 60 to 70, can optionally include that the protected trigger frame includes the integrity check field right before a frame check sequence of the protected trigger frame.

In example 72, the subject matter of example 71, can optionally include that the protected trigger frame includes an association identifier 4095 and zero or more padding bits before the integrity check field.

In example 73, the subject matter of example 71 or example 72, can optionally include that the protected trigger frame includes a ultra high reliability, UHR, special user info field may include a packet number of the protected trigger frame.

In example 74 the subject matter of example 71, can optionally include that the protected trigger frame includes a packet number of the protected trigger frame, can optionally include that the packet number is provided right before the integrity check field.

In example 75, the subject matter of example 74, can optionally include that the protected trigger frame includes an association identifier 4095 and zero or more padding bits right before the packet number of the protected trigger frame.

In example 76, the subject matter of any one of examples 60 to 70, can optionally include that the protected trigger frame includes a ultra high reliability, UHR, special user info field may include the integrity check field and a packet number of the protected trigger frame.

In example 77, the subject matter of any one of examples 60 to 76, can optionally include performing a capability signaling to indicate a support of the protected trigger frame, can optionally include that the capability signaling is via at least one of the following: a robust security network, RSN, capabilities field in an RSN element, RSNE; an extended RSN capabilities field in an RSN extended element, RSNXE; and/or an extended capabilities field in an extended capabilities element.

In example 78, the subject matter includes a non-transitory computer-readable medium comprising one or more instructions which, if executed by a processor of an access point, cause the access point to perform any one of the methods described in examples 60 to 77.

In example 79, the subject matter includes a method for a station device (STA), the method includes decoding a received trigger frame that may include an integrity check field; calculating an expected integrity check field for the received trigger frame; validating the received trigger frame based on a comparison of the integrity check field included in the received trigger frame and the expected integrity check field for the received trigger frame.

In example 80, the subject matter of example 79, can optionally include using a cipher-based message authentication code (CMAC) or a Galois message authentication code (GMAC) cipher suites.

In example 81, the subject matter of example 80, can optionally include that calculating the integrity check field based on the CMAC or GMAC cipher suite and one of the following: an integrity group temporal key for a trigger frame, the integrity group temporal key for the trigger frame different from an existing integrity group temporal key, IGTK, and beacon integrity group temporal key, BIGTK, or the existing IGTK, or the existing BIGTK.

In example 82, the subject matter of example 81, the method can optionally include decoding a received integrity group temporal key data encapsulation may include a key identifier field, a trigger frame integrity group temporal key packet number field, and the integrity group temporal key for the trigger frame, can optionally include that the integrity group temporal key data encapsulation is received from an associated access point.

.

In example 83, the subject matter of example 82, can optionally include that the integrity group temporal key data encapsulation includes a link identifier for a multi-link operation.

In example 84, the subject matter of example 81 or example 82, can optionally include decoding the integrity group temporal key data encapsulation via at least one of the following: a message 3 of a 4-way handshake, a message 3 of a fast BSS transition, FT, 4-way handshake, a FT handshake, a group key handshake, or a fast initial link setup, FELS, authentication.

In example 85, the subject matter of example 81, can optionally include that the integrity group temporal key is specific for trigger frames; the method can optionally include decoding a received integrity group temporal key subelement that may include a subelement identifier field, a length field, a key identifier field, a trigger frame integrity group temporal key packet number field, a key length field, and the integrity group temporal key for the trigger frame, can optionally include that the integrity group temporal key subelement is received from an associated access point.

In example 86, the subject matter of example 82, can optionally include that the integrity group temporal key subelement includes a link identifier for a multi-link operation.

In example 87, the subject matter of example 81 or example 82, decoding the integrity group temporal key subelement via at least one of a FT element, FTE, or a Wireless Network Management, WNM, sleep mode parameters.

In example 88, the subject matter of any one of examples 79 to 88, can optionally calculating the expected integrity check field based on additional authentication data may include a frame control field, a receiver address field, and a transmitter address field of the received trigger frame.

In example 89, the subject matter of any one of examples 79 to 89, can optionally include that the received trigger frame includes information representative of a key identifier of a key to be used to authenticate the received trigger frame, can optionally include that the information representative of the key identifier is within a special user info field.

In example 90, the subject matter of example any one of examples 79 to 89, can optionally include maintaining a replay counter set to a received packet number corresponding to one of i) an indicated key through a received key data encapsulation corresponding to the indicated key or ii) a received integrity group temporal key subelement corresponding to the indicated key, and comparing the replay counter with a packet number of the received trigger frame to detect a replay.

In example 91, the subject matter of any one of examples 79 to 90, can optionally include that the received trigger frame includes the integrity check field right before a frame check sequence of the received trigger frame.

In example 92, the subject matter of example 91, can optionally include that the received trigger frame includes an association identifier 4095 and zero or more padding bits before the integrity check field.

In example 93, the subject matter of example 91 or example 92, can optionally include that the received trigger frame includes an ultra high reliability, UHR, special user info field may include a packet number of the received trigger frame.

In example 94, the subject matter of example 91, can optionally include that the received trigger frame includes a packet number of the received trigger frame, can optionally include that the packet number has been provided right before the integrity check field.

In example 95, the subject matter of example 94, can optionally include that the received trigger frame includes an association identifier 4095 and zero or more padding bits right before the packet number of the received trigger frame.

In example 96, the subject matter of any one of examples 79 to 90, can optionally include that the protected trigger frame includes a ultra high reliability, UHR, special user info field may include the integrity check field and a packet number of the received trigger frame.

In example 97, the subject matter of any one of examples 79 to 89, can optionally include that the processing circuitry is configured to perform a capability signaling to receive an indication that an associated AP supports sending of a trigger frames including integrity check fields, can optionally include that the capability signaling is via at least one of the following: a robust security network, RSN, capabilities field in an RSN element, RSNE; an extended RSN capabilities field in an RSN extended element, RSNXE; and/or an extended capabilities field in an extended capabilities element.

In example 98, the subject matter includes a non-transitory computer-readable medium comprising one or more instructions which, if executed by a processor of a station device, cause the station device to perform any one of the methods described in examples 79 to 97.

Presently, a Trigger Frame (TF) refers to a frame type or a frame transmission occurrence within a specific context, intended to solicit the peer entity into a responding action. For example, an 802.11ax TF may be used to allocate resources for and solicits one or more HE Trigger-Based (TB) PPDU transmissions. The TF may also carry other information required by a responding STA to send an HE TB PPDU. Various types of TF frames may be provided, such as a basic type, a Beamforming Report Poll (BFRP), a MU-BAR, a MU-RTS, a BSRP, a GCP MU-BAR, a Bandwidth Query Report Poll (BQRP), a NDP Feedback Report Poll (NFRP).

When management frame protection is negotiated, the MAC (Sub)layer Management Entity provides an encapsulation service for group addressed Management frames. All designated group addressed Management frames are to be submitted for the encapsulation service.

A Message Integrity Code (MIC) refers to a value generated by a cryptographic function, which may sometimes be referred to as a message authentication code. Should the input data are changed, a new value cannot be correctly computed without knowledge of the cryptographic key(s) used by the corresponding cryptographic function.

Presently, Broadcast/Multicast Integrity Protocol (BIP) provides data integrity for group addressed Management frames after establishment of an IGTKSA or BIGTKSA.

Embodiments according to the disclosure are in particular disclosed in the attached claims directed to a method, a storage medium, a device and a computer program product, wherein any feature mentioned in one claim category, e.g., method, can be claimed in another claim category, e.g., system, as well. The dependencies or references back in the attached claims are chosen for formal reasons only. However, any subject matter resulting from a deliberate reference back to any previous claims (in particular multiple dependencies) can be claimed as well, so that any combination of claims and the features thereof are disclosed and can be claimed regardless of the dependencies chosen in the attached claims. The subj ect-matter which can be claimed comprises not only the combinations of features as set out in the attached claims but also any other combination of features in the claims, wherein each feature mentioned in the claims can be combined with any other feature or combination of other features in the claims. Furthermore, any of the embodiments and features described or depicted herein can be claimed in a separate claim and/or in any combination with any embodiment or feature described or depicted herein or with any of the features of the attached claims.

The foregoing description of one or more implementations provides illustration and description, but is not intended to be exhaustive or to limit the scope of embodiments to the precise form disclosed. Modifications and variations are possible in light of the above teachings or may be acquired from practice of various embodiments.

Certain aspects of the disclosure are described above with reference to block and flow diagrams of systems, methods, apparatuses, and/or computer program products according to various implementations. It will be understood that one or more blocks of the block diagrams and flow diagrams, and combinations of blocks in the block diagrams and the flow diagrams, respectively, may be implemented by computer-executable program instructions. Likewise, some blocks of the block diagrams and flow diagrams may not necessarily need to be performed in the order presented, or may not necessarily need to be performed at all, according to some implementations.

These computer-executable program instructions may be loaded onto a special-purpose computer or other particular machine, a processor, or other programmable data processing apparatus to produce a particular machine, such that the instructions that execute on the computer, processor, or other programmable data processing apparatus create means for implementing one or more functions specified in the flow diagram block or blocks. These computer program instructions may also be stored in a computer-readable storage media or memory that may direct a computer or other programmable data processing apparatus to function in a particular manner, such that the instructions stored in the computer-readable storage media produce an article of manufacture including instruction means that implement one or more functions specified in the flow diagram block or blocks. As an example, certain implementations may provide for a computer program product, comprising a computer-readable storage medium having a computer-readable program code or program instructions implemented therein, said computer-readable program code adapted to be executed to implement one or more functions specified in the flow diagram block or blocks. The computer program instructions may also be loaded onto a computer or other programmable data processing apparatus to cause a series of operational elements or steps to be performed on the computer or other programmable apparatus to produce a computer-implemented process such that the instructions that execute on the computer or other programmable apparatus provide elements or steps for implementing the functions specified in the flow diagram block or blocks.

Accordingly, blocks of the block diagrams and flow diagrams support combinations of means for performing the specified functions, combinations of elements or steps for performing the specified functions and program instruction means for performing the specified functions. It will also be understood that each block of the block diagrams and flow diagrams, and combinations of blocks in the block diagrams and flow diagrams, may be implemented by special-purpose, hardware-based computer systems that perform the specified functions, elements or steps, or combinations of special-purpose hardware and computer instructions.

Conditional language, such as, among others, "can," "could," "might," or "may," unless specifically stated otherwise, or otherwise understood within the context as used, is generally intended to convey that certain implementations could include, while other implementations do not include, certain features, elements, and/or operations. Thus, such conditional language is not generally intended to imply that features, elements, and/or operations are in any way required for one or more implementations or that one or more implementations necessarily include logic for deciding, with or without user input or prompting, whether these features, elements, and/or operations are included or are to be performed in any particular implementation.

Many modifications and other implementations of the disclosure set forth herein will be apparent having the benefit of the teachings presented in the foregoing descriptions and the associated drawings. Therefore, it is to be understood that the disclosure is not to be limited to the specific implementations disclosed and that modifications and other implementations are intended to be included within the scope of the appended claims. Although specific terms are employed herein, they are used in a generic and descriptive sense only and not for purposes of limitation.

## Claims

1. A device for an access point (AP), the device comprising processing circuitry coupled to storage, the processing circuitry configured to:
generate a protected trigger frame comprising one or more fields to carry information associated with one or more station devices (STAs); and
cause to send the protected trigger frame to the one or more STAs.

2. The device of claim 1, wherein the processing circuitry is configured to use a cipher-based message authentication code (CMAC) or a Galois message authentication code (GMAC) cipher suites.

3. The device of claim 1 or claim 2, wherein the protected trigger frame comprises an integrity check field.

4. The device of claim 3, wherein the processing circuitry is configured to calculate the integrity check field based on a used CMAC or GMAC cipher suite and one of the following: an integrity group temporal key for a trigger frame, the integrity group temporal key for the trigger frame different from an existing integrity group temporal key, IGTK, and beacon integrity group temporal key, BIGTK, or the existing IGTK, of the one or more STAs or the existing BIGTK.

5. The device of claim 4, wherein the processing circuitry is configured to generate an integrity group temporal key data encapsulation comprising a key identifier field, an integrity group temporal key packet number field, and the integrity group temporal key for the trigger frame.

6. The device of claim 4, wherein the processing circuitry is configured to generate an integrity group temporal key subelement comprising a subelement identifier field, a length field, a key identifier field, a integrity group temporal key packet number field, a key length field, and the integrity group temporal key for the trigger frame.

7. The device of any one of claims 4 to 6, wherein the processing circuitry is configured to calculate the integrity check field based on additional authentication data comprising a frame control field, a receiver address field, and a transmitter address field of the protected trigger frame.

8. The device of any one of claims 3 to 7, wherein the protected trigger frame comprises the integrity check field right before a frame check sequence of the protected trigger frame.

9. The device of any one of claims 1 to 8, wherein the processing circuitry is configured to perform a capability signaling to indicate a support of the protected trigger frame, wherein the capability signaling is via at least one of the following: a robust security network, RSN, capabilities field in an RSN element, RSNE; an extended RSN capabilities field in an RSN extended element, RSNXE; and/or an extended capabilities field in an extended capabilities element.

10. A device for a station device (STA), the device comprising processing circuitry coupled to storage, the processing circuitry configured to:
decode a received trigger frame comprising an integrity check field;
calculate an expected integrity check field for the received trigger frame;
validate the received trigger frame based on a comparison of the integrity check field included in the received trigger frame and the expected integrity check field for the received trigger frame.

11. The device of claim 10, wherein the processing circuitry is configured to calculate the integrity check field based on a CMAC or GMAC cipher suite and one of the following: an integrity group temporal key for a trigger frame, the integrity group temporal key for the trigger frame different from an existing integral group temporal key, IGTK, and beacon integrity group temporal key, BIGTK, or the existing IGTK, or the existing BIGTK.

12. The device of claim 11, wherein the processing circuitry is configured to decode a received integrity group temporal key data encapsulation comprising a key identifier field, an integrity group temporal key packet number field, and the integrity group temporal key for the trigger frame, wherein the integrity group temporal key data encapsulation is received from an associated access point.

13. The device of any one of claims 10 to 12, wherein the processing circuitry is configured to calculate the expected integrity check field based on additional authentication data comprising a frame control field, a receiver address field, and a transmitter address field of the received trigger frame.

14. The device of any one of claims 10 to 13, wherein the processing circuitry is configured to perform a capability signaling to receive an indication that an associated AP supports sending of a trigger frames including integrity check fields, wherein the capability signaling is via at least one of the following: a robust security network, RSN, capabilities field in an RSN element, RSNE; an extended RSN capabilities field in an RSN extended element, RSNXE; and/or an extended capabilities field in an extended capabilities element.

15. The device of any one of claims 10 to 14, wherein the processing circuitry is configured to maintain a replay counter set to a received packet number corresponding to an indicated key through a received key data encapsulation corresponding to the indicated key or a received integrity group temporal key subelement corresponding to the indicated key; and wherein the processing circuitry is configured to compare the replay counter with a packet number of the received trigger frame to detect replay.
